# EUROPÄISCHE PATENTSCHRIFT

(11) **EP 2 723 788 B1**
(45) Veröffentlichungstag und Bekanntmachung des Hinweises auf die Patenterteilung: **08.07.2015**
(21) Anmeldenummer: 12719288.8
(22) Anmeldetag: 05.05.2012
(51) Int. Cl.: C08G 18/08, C08G 18/10, C08G 18/28, C08G 18/32, C08G 18/61, C08G 18/76, C08G 18/80, C08K 5/205, C08K 5/21, C08K 5/5455, B01J 2/30, B01F 17/00, C09D 7/02, C08G 18/83, C09D 5/02

(54) **VERFAHREN ZUR HERSTELLUNG VON DISPERGIERADDITIVEN**
METHOD FOR PRODUCING DISPERSANT ADDITIVES
PROCÉDÉ DE PRÉPARATION D'ADDITIFS DE DISPERSION

(30) Priorität: 22.06.2011 EP 11005095
(43) Veröffentlichungstag der Anmeldung: 30.04.2014
(73) Patentinhaber: BYK-Chemie GmbH, 46483 Wesel (DE)
(72) Erfinder: GÖBELT, Bernd, 46487 Wesel (DE); NAGELSDIEK, René, 46499 Hamminkeln (DE); OMEIS, Jürgen, 46286 Dorsten-Lembeck (DE); PIESTERT, Frederik, 46483 Wesel (DE); PRITSCHINS, Wolfgang, 46487 Wesel (DE); MEZNARIK, Natasa, 47198 Duisburg (DE); SCHRÖDER, Daniela, 47495 Rheinberg (DE); TIEGS, Werner, 46459 Rees (DE)
(86) Internationale Anmeldenummer: PCT/EP2012/001944
(87) Internationale Veröffentlichungsnummer: WO 2012/175159

(56) Entgegenhaltungen:
- EP-A1- 0 826 753
- EP-A1- 1 593 700
- EP-A2- 1 837 355
- WO-A2-2008/070601

## Beschreibung

Die vorliegende Erfindung betrifft ein Verfahren zur Herstellung einer Additivkomposition, die Additivkomposition, die Verwendung der Additivkomposition, ein Feststoffgemenge sowie einen Lack und einen Kunststoff.

Netzmittel, welche gelöst oder dispergiert in einer Flüssigkeit vorliegen, setzen die Oberflächenspannung bzw. die Grenzflächenspannung herab und vergrößern so das Netzvermögen der Flüssigkeit. Auf diese Weise ermöglichen Netzmittel in vielen Fällen erst überhaupt eine Oberflächenbenetzung.

Dispergiermittel eignen sich im Allgemeinen zur Stabilisierung von Feststoffteilchen in Bindemitteln, Lacken, Pigmentpasten, Kunststoffen und Kunststoffmischungen, Kleb- und Dichtstoffen, zur Reduktion der Viskosität entsprechender Systeme sowie zur Verbesserung der Fließeigenschaften. Dispersionsstabilisatoren werden zur Stabilisierung bereits erzeugter Dispersionen eingesetzt.

Um Feststoffe in flüssige Medien einbringen zu können, sind hohe mechanische Kräfte erforderlich. Es ist üblich, Dispergiermittel einzusetzen, um die Dispergierkräfte zu erniedrigen und um den zur Deflockulierung der Feststoffteilchen notwendigen Gesamtenergieeintrag in das System und damit auch die Dispergierzeit so gering wie möglich zu halten. Im Falle derartiger Dispergiermittel handelt es sich um oberflächenaktive Stoffe, anionischer, kationischer und/ oder neutraler Struktur. Diese Stoffe werden in kleiner Menge entweder direkt auf den Feststoff aufgebracht oder dem Dispergiermedium zugesetzt. Wesentlich ist weiterhin, dass es auch nach vollständiger Deflockulierung der Feststoffagglomerate in Primärteilchen, nach dem Dispergierprozess Reagglomerationen auftreten kann, wodurch der Dispergieraufwand teilweise oder vollständig zunichte gemacht wird. Als Folge von unzulänglicher Dispergierung bzw. von Reagglomeration kommt es typischerweise zu unerwünschten Effekten, wie einem Viskositätsanstieg in flüssigen Systemen, einer Farbtondrift und einem Glanzverlust in Lacken und Beschichtungen sowie einer Verringerung der mechanischen Festigkeit und der Materialhomogenität in Kunststoffen.

Als Netz- und Dispergiermittel kommen in der Praxis verschiedenartige Verbindungstypen in Frage. Dies ist insbesondere darin begründet, dass eine hohe Zahl verschiedener Systeme existiert, welche insbesondere auf verschiedenartigen Bindemitteln kombiniert mit unterschiedlichen zu dispergierenden Partikeln, wie Pigmenten, Füllstoffen sowie Fasern, basiert.

Die EP 0 826 753 A beschreibt ein Herstellungsverfahren für ein Polyisocyanatadduktgemisch-Dispergiermittel. Das Verfahren weist eine geringe Selektivität auf, u. a. weil aufgrund von überschüssigem Isocyanat unerwünschte (z.B. vernetzte Nebenprodukte) entstehen, welche bezüglich der Qualität des Dispergiermittels eine verschlechterte Verträglichkeit und eine unerwünscht hohe Viskosität bewirken.

Auch die WO 2008/070601 A beschreibt ebenfalls eine nur wenig selektive, einstufige Synthese eines Polyisocyanatgemischs, welches u. a. aufgrund hoher Produktheterogenität als Dispergiermittel auch vorstehende Nachteile aufweist.

Die EP 1 837 355 A sowie die EP 1 593 700 A beschreiben jeweils die Herstellung von verzweigten, Biuretgruppen enthaltenden Addukten, welche durch Addition an Uretdiongruppen herstellt werden. Derartige Addukte sind bewährte Dispergiermittel, welche jedoch bezüglich Verträglichkeit, Löslichkeit und Viskosität häufig nicht optimal sind.

Die US 5,130,463 A betrifft die Herstellung von speziellen Phosphorsäureestern, welche als qualitativ hochwertige Netz- und Dispergiermittel anzusehen sind. Allerdings ist in diesen Phosphorsäureestern für viele Dispergiergieraufgaben, insbesondere aufgrund begrenzter Universalität gegenüber den zu dispergierenden Feststoffen, nicht die optimale und vollständige Lösung zu sehen.

Der vorliegenden Erfindung lag somit die Aufgabe zugrunde, ein Verfahren zur Herstellung von qualitativ hochwertigen sowie möglichst universell einsetzbaren Dispergiermitteladditiven bereitzustellen.

Die Lösung dieser Aufgabe ist ein Verfahren zur Herstellung einer Additivkomposition aufweisend die Schritte i) bis iii), wobei

in Schritt i) eine Hydroxykomponente der allgemeinen Formel (I)

Y(-OH)q (I)

mit
Y gleich oder verschieden sowie repräsentiert durch einen 1 bis 1000 Kohlenstoffatome aufweisenden verzweigten oder unverzweigten, gesättigten oder ungesättigten organischen Rest,
q gleich oder verschieden sowie repräsentiert durch eine ganze Zahl von 1 bis 10
umgesetzt wird mit einem unterschiedlich reaktive NCO-Gruppen aufweisenden Diisocyanat der allgemeinen Formel (II)

R¹(NCO)₂ (II)

mit
R¹ gleich oder verschieden sowie repräsentiert durch einen 6 bis 20 Kohlenstoffatome enthaltenden gesättigten oder ungesättigten, verzweigten oder unverzweigten organischen Rest,
wobei das Diisocyanat der allgemeinen Formel (II) gegenüber der Hydroxykomponente der allgemeinen Formel (I) in einem molaren Verhältnis von mindestens (1,1 * arithmetischer Mittelwert von q) : 1,0 eingesetzt wird, so dass ein Isocyanataddukt der allgemeinen Formel (III)

Y(-O-CO-NH-R¹-NCO)_{q} (III)

mit
Y, q und R¹ jeweils wie vorstehend beschrieben,
sowie nicht umgesetztes Diisocyanat der allgemeinen Formel (II) enthaltendes Reaktionsgemisch entsteht,
in Schritt ii) wenigstens 50 Mol-% der nicht umgesetzten Teilmenge des Diisocyanats der allgemeinen Formel (II) aus dem Reaktionsgemisch entfernt wird (bevorzugt zweckmäßigerweise durch Destillation),
in Schritt iii) gebildet wird eine mindestens einen Kopfgruppenrest Z¹ aufweisende Verbindung der allgemeinen Formel (IV)

Y(-O-CO-NH-R¹-NH-CO-X-Z¹)_{q} (IV)

mit
Y, q und R¹ jeweils wie vorstehend beschrieben,
X gleich oder verschieden sowie repräsentiert durch O, NH und/oder NZ²
   mit
   Z² gleich oder verschieden sowie repräsentiert durch einen verzweigten oder unverzweigten, gesättigten oder ungesättigten organischen Rest,
Z¹ gleich oder verschieden sowie repräsentiert durch einen mindestens zwei Kohlenstoffatome enthaltenden verzweigten oder unverzweigten, gesättigten oder ungesättigten organischen Rest, der mindestens eine Kopfgruppe aufweist, die versalzbar oder versalzt vorliegt (das Vorliegen der Kopfgruppen in nicht versalzter, versalzter und/oder teilversalzter Form ist üblicherweise auch abhängig von der jeweiligen chemischen Umgebung (pH-Wert)), sowie ausgewählt ist aus der Gruppe bestehend aus tertiären Aminofunktionen, quaternären Ammoniumfunktionen, Phosphorsäureesterfunktionen sowie Carbonsäurefunktionen,
wobei Schritt iii) in Form einer einzigen Stufe iii-a) oder einer Stufenabfolge iii-b) durchgeführt wird,

in der Stufe iii-a) das in dem Reaktionsgemisch vorliegende Isocyanataddukt der allgemeinen Formel (III) umgesetzt wird mit einer den Kopfgruppenrest Z¹ aufweisenden, gegenüber Isocyanaten reaktiven Verbindung der allgemeinen Formel (V)

HX-Z¹ (V)

mit
X und Z¹ jeweils wie vorstehend beschrieben,
und in der Stufenabfolge iii-b) zunächst das in dem Reaktionsgemisch vorliegende Isocyanataddukt der allgemeinen Formel (III) umgesetzt wird mit einer Verbindung, welche aufweist eine gegenüber Isocyanaten reaktive Gruppe HX sowie mindestens eine weitere funktionelle Gruppe Q, wobei anschließend Q unter Ausbildung des Kopfgruppenrestes Z¹ mit einem weiteren an der Erzeugung des Kopfgruppenrestes Z¹ beteiligten Reagens umgesetzt wird.

Das vorstehend genannte Zeichen * bedeutet multipliziert (mit).

Die Formulierung "gleich oder verschieden" soll bedeuten, dass die jeweilige Zahl, der jeweilige Rest, Substituent bzw. Molekülbestandteil sowohl innerhalb eines (Makro)Moleküls als auch zwischen verschiedenen (Makro)Molekülspezies der gleichen allgemeinen Formel variieren können.

Y ist in der allgemeinen Formel (I) als ein organischer Rest anzusehen, der 1 bis 10 Hydroxylgruppen aufweist. Üblicherweise enthält Y mindestens soviel Kohlenstoffatome wie Hydroxylgruppen.

Die Tatsache, dass q gleich oder verschieden sein kann, bedeutet, dass auch Mischungen verschiedener Spezies eingesetzt werden können, welche sich jeweils durch den Wert q unterscheiden.

Die Bezeichnung "arithmetischer Mittelwert von q" soll bedeuten, dass ein arithmetischer Mittelwert von q zugrunde gelegt wird, welcher aus sämtlichen q-Werten der einzelnen unter die allgemeine Formel (III) fallenden Isocyanataddukten gebildet wird. Wäre beispielsweise bei genau der Hälfte der unter die allgemeine Formel (III) fallenden Isocyanatadduktspezies q = 2 verwirklicht und bei der entsprechend anderen Hälfte der unter die allgemeine Formel (III) fallenden Isocyanatadduktspezies q = 4 verwirklicht, so wäre der entsprechende arithmetische Mittelwert gleich 3.

Der Einsatz des unterschiedlich reaktive NCO-Gruppen aufweisenden Diisocyanats im molaren Überschuss bewirkt eine höhere Selektivität dahingehend, dass vorzugsweise nur genau eine NCO-Gruppe des Diisocyanats in Schritt i) umgesetzt wird. Je größer der molare Überschuss des Diisocyanats, desto höher ist normalerweise die Selektivität bezüglich der Herstellung des in Schritt i) erzeugten unter die allgemeine Formel (III) fallenden Isocyanataddukts. Das aufgrund des Einsatzes im Überschuss anfallende nicht umgesetzte Diisocyanats wird entsprechend wenigstens teilweise (jedoch möglichst vollständig) aus dem Reaktionsgemisch entfernt, um letztendlich den Anteil des daraus in Schritt iii) entstehenden Nebenprodukts (ein Diharnstoff - sofern in Schritt mit einem Amin umgesetzt wird) möglichst gering zu halten. Die in Schritt iii) erfolgte Umsetzung der verbleibenden Isocyanatgruppe(n) des Isocyanataddukts der allgemeinen Formel (III) sollte jedoch ebenfalls möglichst vollständig erfolgen. Optimalerweise ist die hergestellte Additivkomposition weitgehend frei von Isocyanatgruppen, insbesondere weitgehend frei von dem eingesetzten Diisocyanat.

Es ist hervorzuheben, dass die mit dem erfindungsgemäßen Verfahren herstellbare

Additivkomposition eine gute Dispergierwirkung bezüglich eines breiten Spektrums von zu dispergierenden Feststoffen zeigt. Dies äußert sich u. a. darin, dass Feststoffe mit sauren, neutralen und basischen Oberflächen jeweils effektiv dispergiert werden können.

Die mit dem erfindungsgemäßen Verfahren erzeugte Additivkomposition ist von besonders hoher Qualität und universell als Netz- und Dispergiermittel einsetzbar. Konkret kann gesagt werden, dass die erfindungsgemäß erzeugte Additivkomposition sowohl in polaren als auch in unpolaren Bindemittelsystemen erfolgreich eingesetzt werden kann und dabei als Netz- und Dispergiermittel bzw. als Dispersionsstabilisatoren eine ausgezeichnete Verträglichkeit zeigt. Dies gewährleistet den erfolgreichen Einsatz in Kombination mit den unterschiedlichsten Bindemitteln und Überzugsmaterialien. Weiterhin ermöglicht die mit dem erfindungsgemäßen Verfahren hergestellte Additivkomposition eine flockulationsfreie Mischbarkeit von Pasten, insbesondere Pigmentpasten, bzw. der mit diesen Pasten hergestellten Bindemitteln. Darüber hinaus eignen sich die erfindungsgemäßen Phosphorsäurederivate als Dispersionsstabilisatoren, insbesondere auch als Emulsionsstabilisatoren. Durch den Einsatz der mit dem erfindungsgemäßen Verfahren hergestellten Additivkomposition wird die Viskosität des eingetragenen Mahlgutes während der Dispergierung deutlich reduziert und ermöglicht auf diese Weise die Herstellung von Formulierungen, welche einen hohen Feststoffanteit aufweisen. Auf diese Weise kann zur besseren Umweltverträglichkeit der Anteil an (flüchtigen) Lösemitteln reduziert werden. Resümierend kann gesagt werden, dass die mit dem erfindungsgemäßen Verfahren hergestellte Additivkomposition bei guter Stabilisierung von Pigmenten oder Füllstoffen die Mahlgutviskosität entsprechender Lacke, Pasten oder Kunststoffformulierungen soweit senken, dass eine Verarbeitung bei hohem Füllgrad möglich ist, ohne dass die Beständigkeit der ausgehärteten Lacke negativ beeinflusst werden. Schließlich ist zu erwähnen, dass das erfindungsgemäße Verfahren verhältnismäßig einfach und wirtschaftlich durchführbar ist, wobei die eingesetzten Ausgangsstoffe allgemein gut verfügbar sind.

In einer bevorzugten Ausführungsform ist q gleich oder verschieden und wird durch eine ganze Zahl von 1 bis 5, bevorzugt durch 1 und/oder 2, repräsentiert.

Durch den Parameter q wird maßgeblich der Strukturtyp der in Schritt iii) erhaltenen Verbindung bestimmt.

Spezies der allgemeinen Formel (IV) mit q > 1, beispielsweise mit q = 2 bis 5, verbessern in der Regel insbesondere das Antiabsetzverhalten, während Spezies mit geringem "q-Werten", insbesondere mit q = 1, meist insbesondere verstärkt zum Deflokkulationsverhalten beitragen. Allgemein kann gesagt werden, dass je größer q desto mehr Haftgruppen pro Molekül und desto stärker in der Regel die Haftung des Moleküls an Feststoffoberflächen.

Zur Optimierung der Deflokkulationswirkung sollten zweckmäßigerweise (ggf. ausschließlich) Spezies der allgemeinen Formel (I) (im Herstellungsverfahren) bzw. der allgemeinen Formel (IV) (bei der Anwendung) mit jeweils q = 1 eingesetzt werden.

In einer ganz besonders bevorzugten Ausführungsform ist somit q gleich 1, so dass in dem die Schritte i) bis iii) aufweisenden Verfahren,

in Schritt i) als Hydroxykomponente eine Monohydroxyverbindung der allgemeinen Formel (la)

Y-OH (la)

mit
Y gleich oder verschieden sowie repräsentiert durch einen 1 bis 1000 Kohlenstoffatome aufweisenden verzweigten oder unverzweigten, gesättigten oder ungesättigten organischen Rest
umgesetzt wird mit einem unterschiedlich reaktive NCO-Gruppen aufweisenden Diisocyanat der allgemeinen Formel (II)

R¹(NCO)₂ (II)

mit
R¹ gleich oder verschieden sowie repräsentiert durch einen 6 bis 20 Kohlenstoffatome enthaltenden gesättigten oder ungesättigten, verzweigten oder unverzweigten organischen Rest,
wobei das Diisocyanat der allgemeinen Formel (II) gegenüber der Monohydroxyverbindung der allgemeinen Formel (Ia) in einem molaren Verhältnis von mindestens 1,1 : 1,0 eingesetzt wird,
so dass ein Monoisocyanataddukt der allgemeinen Formel (IIIa)

Y-O-CO-NH-R¹-NCO (IIIa)

mit
Y und R¹ jeweils wie vorstehend beschrieben,
sowie nicht umgesetztes Diisocyanat der allgemeinen Formel (II) enthaltendes Reaktionsgemisch entsteht,
in Schritt ii) wenigstens 50 Mol-% der nicht umgesetzten Teilmenge des Diisocyanats der allgemeinen Formel (II) aus dem Reaktionsgemisch entfernt wird,
in Schritt iii) gebildet wird eine mindestens einen Kopfgruppenrest Z¹ aufweisende Verbindung der allgemeinen Formel (IVa)

Y-O-CO-NH-R¹-NH-CO-X-Z¹ (IVa)

mit
Y und R¹ jeweils wie vorstehend beschrieben,
X gleich oder verschieden sowie repräsentiert durch O, NH und/oder NZ²
   mit
   Z² gleich oder verschieden sowie repräsentiert durch einen verzweigten oder unverzweigten, gesättigten oder ungesättigten organischen Rest,
Z¹ gleich oder verschieden sowie repräsentiert durch einen mindestens zwei Kohlenstoffatome enthaltenden verzweigten oder unverzweigten, gesättigten oder ungesättigten organischen Rest, der mindestens eine Kopfgruppe aufweist, die versalzbar oder versalzt vorliegt, sowie ausgewählt ist aus der Gruppe bestehend aus tertiären Aminofunktionen, quaternären Ammoniumfunktionen, Phosphorsäureesterfunktionen sowie Carbonsäurefunktionen,
wobei Schritt iii) in Form einer einzigen Stufe iii-a) oder einer Stufenabfolge iii-b) durchgeführt wird,
in der Stufe iii-a) das in dem Reaktionsgemisch vorliegende Monoisocyanataddukt der allgemeinen Formel (IIIa) umgesetzt wird mit einer den Kopfgruppenrest Z¹ aufweisenden, gegenüber Isocyanaten reaktiven Verbindung der allgemeinen Formel (V)

HX-Z¹ (V)

mit
X und Z¹ jeweils wie vorstehend beschrieben,
und in der Stufenabfolge iii-b) zunächst das in dem Reaktionsgemisch vorliegende Monoisocyanataddukt der allgemeinen Formel (IIIa) umgesetzt wird mit einer Verbindung, welche aufweist eine gegenüber Isocyanaten reaktive Gruppe HX sowie mindestens eine weitere funktionelle Gruppe Q, wobei anschließend Q unter Ausbildung des Kopfgruppenrestes Z¹ mit einem weiteren an der Erzeugung des Kopfgruppenrestes Z¹ beteiligten Reagens umgesetzt wird.

Wenn eine stark deflokkulierende Wirkung des als Netz- und Dispergiermittels eingesetzten Verfahrensprodukts angestrebt wird, sollten somit entsprechend (ggf. ausschließlich) Monoalkohole Y-OH eingesetzt werden.

Üblicherweise enthält Y mindestens einen Polyetherrest, Polyesterrest, Kohlenwasserstoffrest und/oder Polysiloxanrest.

Häufig enthält Y insgesamt 1 bis 450 Ethersauerstoffatome, welche bevorzugt in Ethersauerstoffatome aufweisenden Gruppen enthalten sind, die sich ableiten von Polytetrahydrofuran, Polyoxetanen und/oder Polyoxiranen.

Typischerweise enthält Y insgesamt 3 bis 400 Ethersauerstoffatome, wobei mindestens 50, bevorzugt mindestens 80 Mol-% der Ethersauerstoffatome in Ethylenoxid- und/oder Propylenoxidstruktureinheiten vorliegen.

Der im erfindungsgemäßen Verfahren eingesetzte Alkohol Y(-OH)q kann zusätzliche Heteroatome, wie O, S, Si und/oder N, aufweisen, bzw. Ether-, Urethan-, Carbonat-, Amid-, Harnstoff- und/oder Estergruppen enthalten. Gegebenenfalls ist in den Gruppen Y Wasserstoff gegen Halogen (beispielsweise Fluor und/oder Chlor) substituiert. Der Rest Y kann weitere Gruppen, wie C=C-Doppelbindungen, tragen, die sich bei der Bildung des Additionsproduktes inert verhalten. Die gegebenenfalls vorhandenen Ester, Ether, Urethan, Carbonat und/oder Siloxan-Gruppen können in Blockstruktur vorliegen (beispielsweise Poly(ethylenoxidblock-propylenoxydblock-epsilon-caprolacton), einen Gradienten bilden oder auch statistisch angeordnet sein.

Zu Ethergruppen bzw. Polyethern, welche in Y enthalten sein können:
Als Y-(OH)_{q} können auch Mono-, Di-, oder Polyhydroxypolyether eingesetzt werden. Diese können zum Beispiel durch Alkoxylierung von vorstehend als Y-(OH)_{q} beschriebenen Verbindungen, wie Alkanolen, Cycloalkanolen, Phenolen mit Alkylenoxiden wie Ethylenoxid, Propylenoxid, Butylenoxid, Styroloxid, aliphatischen oder aromatischen Glycidethern wie Isopropylglycidether, Butylglycidether, Allyglycideter, 2-Ethylhexylglycidether, Kresylglycidether und Phenylglycidether dargestellt werden. Es können auch Mischungen dieser Rohstoffe eingesetzt werden. Im Falle von gemischten Polyethern können diese statistisch, in Gradientenform oder in Blöcken angeordnet sein. Diese Polyether haben häufig ein zahlenmittleres Molekulargewicht (Mₙ) im Bereich von etwa 100 bis 25000, besonders häufig von 150 bis 15000 und besonders typisch von 200 bis 10000 g/mol. Bevorzugt sind Polyether auf Basis von Ethylenoxid, Propylenoxid und deren Mischungen.

Beispiele sind hydroxyfunktionelle Vinylverbindungen, wie Hydroxybutylvinylether, monohydroxyfunktionelle Polyoxyalkylenmonoalkohole, wie Allylpolyether (z.B. Polyglykol A 350, Polyglykol A 500, Polyglykol A 1100, Polyglykol A 11-4, Polyglykol A 20-10 oder Polyglykol A 20-20 der Clariant AG oder Pluriol^{®} A 010 R, Pluriol^{®} A 11 RE, Pluriol^{®} A 13 R, Pluriol^{®} A 22 R oder Pluriol^{®} A 23 R der BASF AG), Vinylpolyether (wie Polyglykol V 500, Polyglykol V 1100 oder Polyglykol V 5500 der Clariant AG), Methanol gestartete Polyoxyethylenmonoalkohole (wie Pluriol^{®} A 350 E, Pluriol^{®} A 500 E, Pluriol^{®} A 750 E, Pluriol^{®} A 1020 E, Pluriol^{®} A 2000 E oder Pluriol^{®} A 5010 E der BASF AG), Alkanol gestartete Polyoxypropylenmonoalkohole (wie z.B. Polyglykol B01/20, Polyglykol B01/40, Polyglykol B01/80, Polyglykol B01/120 oder Polyglykol B01/240 der Clariant AG oder Pluriol^{®} A 1350 P oder Pluriol^{®} A 2000 P der BASF AG) und mit verschiedenen Fettalkoholen gestarteten Polyalkoxylate mit variablem Alkoxylierungsgrad (unter den Handelsnamen Lutensol^{®} A, Lutensol^{®} AT, Lutensol^{®} AO, Lutensol^{®} TO, Lutensol^{®} XP, Lutensol^{®} XL, Lutensol^{®} AP und Lutensol^{®} ON der BASF AG bekannt). Bevorzugt werden Polyoxyalkylenmonoalkohole verwendet, die Ethylenoxid- und/oder Propylenoxid-und/oder Butylenoxidgruppen enthalten und gegebenenfalls mit Styroloxid modifiziert sind. Besonders bevorzugt ist die Verwendung von Polyoxyalkylenmonoalkoholen (wie Polyglykol B 11/50, Polyglykol B 11/70, Polyglykol B 11/100, Polyglykol B 11/150, Polyglykol B 11/300 oder Polyglykol B 11/700 von der Clariant AG, Pluriol^{®} A 1000 PE, Pluriol^{®} A 1320 PE, oder Pluriol^{®} A 2000 PE der BASF SE oder Terralox WA 110 von DOW Chemicals), bei denen es sich um Butanol gestartete Polyoxyalkylene aus Ethylen- und Propylenoxid mit einer terminalen OH-Gruppe handelt.

Zu Kohlenwasserstoffresten, welche in Y enthalten sein können:

Die Kohlenwasserstoffreste liegen bevorzugt als Arylrest, als verzweigter oder unverzweigter Alkylarylrest, Aralkylrest und/oder als acyclischer, cyclischer verzweigter oder unverzweigter Alkylrest vor. Es können auch Gemische solcher Verbindungen, d.h. mindestens zwei verschiedene Verbindungen Y-(OH)_{q} eingesetzt werden. Die aliphatischen oder araliphatischen Verbindungen Y-(OH)_{q} können geradkettig oder verzweigt, gesättigt oder ungesättigt vorliegen. Gesättigte Spezies sind bevorzugt.

Beispiele für Y(-OH)_{q} mit Kohlenwasserstoffresten - bei q = 1 - sind Methanol, Ethanol, Butanol, Ethylhexanol, Decanol, Isotridecylalkohol, Laurylalkohol, Stearylalkohol, Isobornylalkohol, Benzylalkohol, Propargylalkohol, Oleylalkohol, Linoleylalkohol, Oxoalkohole, Neopentylalkohol Cyclohexanol, Fettalkohole, Alkylphenole, Alkylnaphthole, Phenylethanol und Zuckeralkohole.

Beispiele für Y(-OH)q mit Kohlenwasserstoffresten - bei q > 1 - sind Butandiol, Hexandiol, Cyclohexandimethanol, Neopentylglykol, Ethylenglykol, Glycerin und Trimethylolpropan.

Weiterhin können Y(-OH)q Polyolefinpolyole oder -monoole, wie nichthydrierte, teilhydrierte und/ oder vollständig hydrierte Polybutadiene, nichthydrierte, teilhydrierten und/ oder vollständig hydrierte Polyisoprene, Polyisobutylene, Polypropylene oder Ethylen/Butylen-Copolymere sein. Diese Verbindungen sind bekannt. So wird beispielsweise der Zugang zu hydroxyfunktionellem Polyisobutylenen in US 6875897 beschrieben.

Zu Estergruppen bzw. Polyestern, welche in Y enthalten sein können:
Als Y-(OH)_{q} können auch Monohydroxymonoester und Mono-, Di-, oder Polyhydroxypolyester eingesetzt werden.

Hydroxyfunktionelle Acrylate oder Methacrylate, wie Hydroxyethylacrylat, Hydroxyethylmethacrylat, Hydroxybutyl(meth)acrylat sind Beispiele für geeignete Monohydroxymonoester.

Polyester können z.B. durch Umsetzung von Dicarbonsäuren sowie deren veresterbaren Derivaten, wie Anhydriden, Säurechloriden oder Dialkylestern (wie Dimethylestern oder Diethylestern) durch Umsetzung mit Diolen und mono-, di-, oder trifunktionellen Startkomponenten, hergestellt werden. Die Bildung von Dihydroxypolyestern kann bei Bedarf durch Einsatz entsprechend stöchiometrischer Mengen an Monohydroxyverbindungen zurückgedrängt werden. Die Veresterung kann in Substanz oder auch durch azeotrope Veresterung in Anwesenheit eines Schleppmittels durchgeführt werden. Beispiele für Dicarbonsäuren sind Bernsteinsäure, Maleinsäure, Fumarsäure, Glutarsäure, Adipinsäure, Sebacinsäure, Pimelinsäure, Phthalsäure oder dimerisierte Fettsäuren und deren Isomere sowie Hydrierungsprodukte. Beispiele für entsprechende Diole sind: Ethylenglykol, 1,2-Propandiol, 1,3-Propandiol, 1,4-Butandiol, 1,6-Hexandiol, Neopentylglykol, cis-1,2-Cyclohexandimethanol, trans-1,2-Cyclohexandimethanol, sowie Polyglykole auf Basis von Ethylenglykol und/ oder Propylenglykol.

Bevorzugte Polyester für den Einsatz als Y(-OH)q sind solche, die durch Polykondensation einer oder mehrerer, gegebenenfalls alkylsubstituierter, Hydroxycarbonsäuren und/oder Ringöffnungspolymerisation der korrespondierenden Lactone, wie Propiolacton, Valerolacton, Butyrolacton, Caprolacton und/ oder substituierten Lactonen mittels einer Mono-, Di, - oder Trihydroxy-Startkomponente (wie in US-A-4 647 647 beschrieben) erhalten werden können. Bevorzugt besitzen diese ein zahlenmittleres Molekulargewicht Mₙ von 150 bis 5000 g/mol. Als Startkomponente sind im Prinzip alle anderen als Y-(OH)_{q} aufgeführten Verbindungen einsetzbar. Es können auch jeweils Gemische der vorgenannten Verbindungen eingesetzt werden. Die Lactonpolymerisation wird nach bekannten Verfahren, initiert durch beispielsweise Titanate, p-Toluolsulfonsäure oder Dibutylzinndilaurat, bei Temperaturen von etwa 70° C bis 180°C durchgeführt. Besonders bevorzugt sind Polyester auf ε-Caprolacton-Basis, gegebenenfalls in Kombination mit δ-Valerolacton.

Zu Urethanresten bzw. Polyurethanen, welche in Y enthalten sein können:

Als Y-(OH)_{q} können auch Polyurethane, Polyether- Polyurethane, Polyester-Polyurethane und/oder Polyether-Polyester-Polyurethane eingesetzt werden, die durch Additionsreaktion von Diisocyanaten, mit Dihydroxyverbindungen in Anwesenheit von mono-, di-, oder trifunktionellen Startkomponenten erhalten werden können. Als Hydroxyverbindungen zum Aufbau der urethangruppenhaltigen Verbindungen Y-(OH)_{q} werden bevorzugt Diole mit 2 bis 12 Kohlenstoffatomen, Polyoxyalkylenglykole und dihydroxyfunktionelle Polyester eingesetzt. Die Polyether und Polyester sind vorstehend beschrieben.

Zu Polycarbonaten, welche in Y enthalten sein können:
Der Rest Y kann auch Carbonatgruppen enthalten, wie diese durch bekannte Umsetzungen mit offenkettigen und/oder cyclischen Carbonaten erhalten werden. Geeignet sind zum Beispiel mit Carbonaten modifizierte lineare Polyester oder Polycarbonatdiole, wie diese in der Polyurethanherstellung verwendet werden. Beispiele sind beschrieben in der US-4 101 529. Geeignete Carbonate sind z.B. aliphatische, cycloaliphatische, araliphatische und/oder aromatische Kohlensäurester, wie Dialkylcarbonate, z.B. Dimethylcarbonat, Diethylcarbonat oder Diphenylcarbonat, Catecholcarbonat oder cyclische Alkylencarbonate. Besonders geeignet sind cyclische Alkylencarbonate mit 5 oder 6-gliedrigen Ringen, die gegebenenfalls substituiert sein können. Als Substituenten sind aliphatische, cycloaliphatische und/oder aromatische Gruppen mit bis zu 30 Kohlenstoffatomen bevorzugt. Beispiele für geeignete cyclische Alkylencarbonate sind Ethylencarbonat, Propylencarbonat, Glycerincarbonat, Trimethylencarbonat, 4-Methyltrimethylencarbonat, 5-Methyltrimethylencarbonat, 5,5-Dimethyltrimethylencarbonat, 5,5-Diethyltrimethylencarbonat oder 5-Methyl-5-propyltrimethylencarbonat.

Zu Polyoxazolinen, welche in Y enthalten sein können:
Als Y-(OH)_{q} können auch hydroxyfunktionelle Poly-2-alkyl-2-oxazoline oder Poly-2-alkyl-2-oxazine fungieren. Bevorzugt werden monohydroxyfunktionelle Verbindungen eingesetzt. Poly-2-alkyl-2-oxazoline oder Poly-2-alkyl-2-oxazine werden durch kationische, ringöffnende Polymerisation von 2-Alkyl-2-oxazolinen oder 2-alkyl-2-oxazinen mit Initiatoren, wie Para-Toluolsulfonsäure, Methyltosylat oder Methyltriflat, erhalten. Die durch den lebenden kationischen Potymerisationsmechanismus resultierenden Oxazolinium- oder Oxaziniumendgruppen können durch alkalische Hydrolyse über Aminoesterendgruppen in die stabileren Hydroxyamide überführt werden. Ein alternativer Weg zur Herstellung von monohydroxyfunktionellen Poly-2-alkyl-2-oxazolinen oder Poly-2-alkyl-2-oxazinen ist die Polymerisation mit 2-(4-hydroxyphenyl)-N-methyl-2-oxazolinium trifluormethansulfonat als initiierender Spezies. (A. Groß, G. Maier, O. Nuyken, Macromol. Chem. Phys. 197, 2811-2826 (1996)). Durch Wahl des Alkylsubstituenten lässt sich die Verträglichkeit steuern, so ist beispielsweise Poly-2-ethyl-2-oxazolin durch seine Wasserlöslichkeit für hochpolare Systeme geeignet, während beispielsweise Poly-2-lauryl-2-oxazolin in unpolaren Systemen verträglich ist. Werden Blockcopolymere aus 2-Ethyl-2-oxazolin und 2-Lauryl-2-oxazolin gebildet, so zeichnen sich die Polymere durch eine besonders breite Verträglichkeit aus. Solche Poly-2-alkyl-2-oxazoline oder Poly-2-alkyl-2-oxazine besitzen meist ein zahlenmittleres Molekulargewicht Mₙ von 300 bis 20000 g/mol, bevorzugt von 500 bis 10000 g/mol. Einsetzbar sind unter anderem verschiedenartige 2-Oxazoline, welche eventuell zusätzliche funktionelle Gruppen aufweisen können. Derartige Spezies sind beispielsweise entsprechende fettsäurebasierte 2-Oxazoline.

Zu OH-funktionelle Polymeren von ethylenisch ungesättigten Verbindungen, welche in Y enthalten sein können:
Als Y-(OH)_{q} können auch OH-funktionelle Polymere von ethylenisch ungesättigten Monomeren eingesetzt werden. Die OH-Funktionen können über die ethylenisch ungesättigte Monomere, über Initiatoren oder Kettenregler in bekannter Weise eingeführt werden. Bevorzugt sind monohydroxyfunktionelle Polyacrylsäureester bzw. Polymethacrylsäureester. Solche Verbindungen sind auf diesem Gebiet der Technik bereits zur Herstellung von anderen Dispergiermitteln verwendet worden, wie sie in der US-A-4 032 698 bzw. in der EP 318 999 beschrieben sind. Diese Polyacrylate haben meist ein zahlenmittleres Molekulargewicht Mₙ von 300 bis 20000 g/mol, bevorzugt meist von 500 bis 10000 g/mol. Diese können in Blockstruktur oder auch statistisch angeordnet sein oder einen Gradienten bilden.

Beispiele für OH-funktionelle ethylenisch ungesättigte Monomere sind Hydroxyalkyl(meth)acrylate von geradkettigen, verzweigten oder cycloaliphatischen Diolen mit 2 bis 36 C-Atomen, wie 3-Hydroxypropylmethacrylat, 3,4-Dihydroxybutylmonomethacrylat, 2-Hydroxyethyl(meth)acrylat, 4-Hydroxybutyl(meth)acrylat, 2-Hydroxypropylmethacrylat, 2,5-Dimethyl-1,6-hexandiolmonomethacrylat; Caprolacton- und/oder Valerolacton-modifizierte Hydroxyalkyl(meth)acrylate (wobei die Hydroxy(meth)acrylate bevorzugt von geradkettigen, verzweigten oder cycloaliphatischen Diolen mit 2 bis 8 C-Atomen abgeleitet sind); OH-funktionelles Poly(ethylenglycol)(meth)acrylat und OH-funktionelles Poly(propylenglycol)(meth)acrylat.

Beispiele für weitere ethylenisch ungesättigte Monomere sind Alkyl(meth)acrylate von geradkettigen, verzweigten oder cycloaliphatischen Alkoholen mit 1 bis 22 C-Atomen, wie Methyl(meth)acrylat, Ethyl(meth)acrylat, n-Butyl(meth)acrylat, i-Butyl(meth)acrylat, t-Butyl(meth)acrylat, Lauryl(meth)acrylat, 2-Ethylhexyl(meth)acrylat, Stearyl(meth)acrylat, Cyclohexyl(meth)acrylat, Isobornyl(meth)acrylat und t-Butyl(meth)acrylat; Aryl(meth)acrylate, wie Benzylmethacrylat oder Phenylacrylat (wobei die Arylreste jeweils unsubstituiert oder bis zu vierfach substituiert sein können), wie 4-Nitrophenylmethacrylat; Mono(meth)acrylate von Ethern, Polyethylenglykolen, Polypropylenglycolen oder gemischten Polyethylen/propylenglycolen mit 5 bis 80 C-Atomen, wie Tetrahydrofurfurylmethacrylat, Methoxyethoxyethylmethacrylat, 1-Butoxypropylmethacrylat, Cyclohexyloxymethylmethacrylat, Methoxymethoxyethylmethacrylat, Benzyloxymethylmethacrylat, Furfurylmethacrylat, 2- Butoxyethylmethacrylat, 2-Ethoxyethylmethacrylat, Allyloxymethylmethacrylat, 1-Ethoxybutylmethacrylat, 1-Ethoxyethylmethacrylat, Ethoxymethylmethacrylat, Poly(ethylenglycol)methylether(meth)acrylat, Poly(propylenglycol)methylether(meth)acrylat; Aminoalkyl(meth)acrylate, wie N,N-Dimethylaminoethyl(meth)acrylat, 2-Trimethylammoniumethylmethacrylatchlorid und N,N-Dimethylaminopropyl(meth)acrylat; (Meth)acrylate von halogenierten Alkoholen, wie Perfluoralkyl(meth)acrylate mit 6 bis 20 C-Atomen; Styrol und substituierte Styrole, wie 4-Methylstyrol, Methacrylnitril und Acrylnitril; ethylenisch ungesättigte Heterocyclen, wie zum Beispiel 4-Vinylpyridin und 1-[2-(Methacryloyloxy)-ethyl]-2-imidazolidinon; Vinylester von Carbonsäuren mit 1 bis 20 C-Atomen, wie Vinylacetat; Maleinimid, N-Phenylmaleinimid und N-substituierte Maleinimide mit geradkettigen, verzweigten oder cycloaliphatischen Alkylgruppen mit 1 bis 22 C-Atomen, wie N-Ethylmaleinimid und N-Octylmaleinimid; (Meth)acrylamid; N-Alkyl- und N,N-Dialkylsubstituierte Acrylamide mit geradkettigen, verzweigten oder cycloaliphatischen Alkylgruppen mit 1 bis 22 C-Atomen, wie N-(t-Butyl)acrylamid und N,N-Dimethylacrylamid;

Bevorzugte nicht OH-funktionelle Monomere sind Alkyl(meth)acrylate, Aryl(meth)acrylate und Styrol.

Zu Polysiloxanen, welche in Y enthalten sein können:
Als Y-(OH)_{q} können auch mono- oder polyhydroxyfunktionelle Polysiloxane eingesetzt werden.
Die Polysiloxane lassen sich mit der nachstehenden allgemeinen Formel beschreiben: 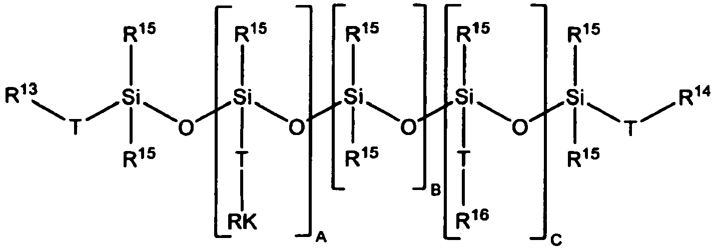
mit
- T: = C₁-C₁₄-Alkylen,
- RK: = unverzweigter Polyetherrest aus Alkylenoxid-Einheiten mit 1-6 Kohlenstoffatomen, und/oder aliphatischer und/oder cycloaliphatischer und/oder aromatischer Polyesterrest mit einem gewichtsmittleren Molekulargewicht zwischen 200 und 4000 g/mol,
- R¹³ und R¹⁴: jeweils unabhängig repräsentiert durch C₁-C₁₄-Alkyl, -Aryl oder -Aralkyl, -O(C₁-C₁₄-Alkyl, -Aryl oder -Aralkyl), -OCO(C₁-C₁₄-Alkyl, -Aryl oder -Aralkyl), -O-CO-O(C₁-C₁₄-Alkyl, -Aryl oder -Aralkyl), -OSO₂(C₁-C₁₄-Alkyl, -Aryl oder -Aralkyl), -H, -Cl, -F, -OH, -R, -RK,
- R¹⁵: = C₁-C₁₄-Alkyl, -Aryl oder -Aralkyl,
- R¹⁶: = polyhydroxyfunktioneller verzweigter Polyglycidol-Polyetherrest, der aus einer verzweigten Polyglycidolgruppe besteht oder diese enthält,
- A: = 0 - 20, bevorzugt 1 - 15, besonders bevorzugt 1 - 8,
- B: = 2 - 300, bevorzugt 10 - 200, besonders bevorzugt 15 - 100 und
- C: = 0 - 20, bevorzugt 1 - 15, besonders bevorzugt 1 - 8,
wobei bei C = 0 gilt, dass R¹⁴ = R¹⁶ und/oder R¹³ = R¹⁶. Wenn die Einheit -[SiR¹⁵(Z-R¹⁶)]-O- vorhanden ist, d. h. C mindestens 1 ist, so ist es möglich, dass R¹³ und R¹⁴ verschieden von R¹⁶ sind.

Die genannten Polysiloxanreste können auch als organomodifizierte Polysiloxanreste vorliegen.

Bezüglich des erfindungsgemäß eingesetzten, unterschiedlich reaktive NCO-Gruppen aufweisenden Diisocyanats R¹(NCO)₂, ist R¹ gleich oder verschieden und liegt häufig in Form eines Kohlenwasserstoffrests, bevorzugt als Arylengruppe, als verzweigte oder unverzweigte Alkylarylengruppe und/oder als azyklische, zyklische, verzweigte oder unverzweigte Alkylengruppe vor. Prinzipiell (wenn auch meist von Nachteil) ist es auch möglich, die erfindungsgemäß eingesetzten, unterschiedlich reaktive NCO-Gruppen aufweisenden Diisocyanate zusammen (gemischt) mit anderen (Di)Isvcyanaten, die keine unterschiedlich reaktive NCO-Gruppen aufweisen, einzusetzen. Der Einsatz insbesondere größeren Mengen dieser anderen (Di)Isocyanate ist allerdings in der Regel aufgrund der geringeren Selektionswirkung bezüglich der entstehenden Produkte von erheblichem Nachteil.

In einer bevorzugten Ausführungsform liegt das Diisocyanat der allgemeinen Formel (II) als Toluol-2,4-diisocyanat und/oder als Isophorondiisocyanat, bevorzugt als Toluol-2,4-diisocyanat vor.

In dem erfindungsgemäßen Verfahren kann die Isocyanataddition, je nach Reaktivität der einzelnen Reaktionspartner, in dem für diese Art von Reaktion üblichen Temperaturbereich von Raumtemperatur bis etwa 150 °C, bevorzugt bis 100°C, besonders bevorzugt bis 70°C erfolgen. Zur Beschleunigung und Reduzierung von Nebenreaktionen können die bekannten und üblichen Katalysatoren, wie tertiäre Amine, Triethylamin, Dimethylcyclohexylamin, N-Methylmorpholin, N,N'-Dimethylpiperazin, 2-(Dimethylaminoethoxy)ethanol, Diazabicyclo-(2,2,2)octan und ähnliche sowie insbesondere organische Metallverbindungen, wie Titansäureester, Eisenverbindungen wie Eisen-(III)-acetylacetonat, Zinnverbindungen, beispielsweise Zinndiacetat, Zinndioctoat, Zinndilaurat oder die Dialkylderivate von Zinndialkylsalzen aliphatischer Carbonsäuren wie Dibutylzinndiacetat, Dibutylzinndilaurat oder ähnliche verwendet werden. Diese Katalysatoren werden üblicherweise in Mengen von 0,0001 bis 0,1 Gew.-Teilen pro 100 Gew.-Teile Diisocyanat eingesetzt.

Das Urethan (III) reagiert zum Harnstoffurethan (bzw. Diurethanen) unter den gleichen Reaktionsbedingungen wie die Addition der Alkoholkomponente Y(-OH)_{q} an das Diisocyanat. Da jedoch ein primäres bzw. sekundäres Amin mit der Isocyanatgruppe des Urethans (III) deutlich schneller reagiert als eine Hydroxyfunktion, kann die Additionsreaktion bei Umsetzung von primären bzw. sekundären Aminen entsprechend auch ohne Katalysatoren durchgeführt werden.

Das erfindungsgemäße Verfahren kann, je nach Viskosität, in Substanz oder in Gegenwart von geeigneten Lösemitteln, Lösemittelgemischen oder anderen geeigneten Trägermedien durchgeführt werden. Geeignet sind alle Lösemittel oder Trägermedien, die unter den gewählten Reaktionsbedingungen nicht reaktiv sind oder deren Reaktivität gegenüber den Reaktionspartnern zu vernachlässigen ist und in denen die Reaktanden und die Reaktionsprodukte zumindest teilweise löslich sind. Hierzu zählen beispielsweise Kohlenwasserstoffe wie Toluol, Xylol, aliphatische und/oder cyloaliphatische Benzinfraktionen, chlorierte Kohlenwasserstoffe wie Chloroform, Trichlorethan, cyclische und acyclische Ether wie Dioxan, Tetrahydrofuran, Polyalkylenglykoldialkylether wie Dipropylenglykoldimethylether, Ester von Mono-, Di- oder Polycarbonsäuren wie Ethylacetat, Butylacetat, Butyrolacton, Dimethyl-2-Methylglutarat, Triacetin, Phthalate oder andere Weichmacher, Di- oder Polycarbonsäureester, als "Dibasic Ester" bezeichnete Dialkylester von C₂-C₄-Dicarbonsäuren, Alkylglykolester wie Ethylglykolacetat, Methoxypropylacetat, Ketone wie Methylisobutylketon, Cyclohexanon, Aceton, Säureamide wie Dimethylformamid, N-Methylpyrrolidon und dergleichen. Zweckmäßig wählt man das oder die Lösemittel bzw. Trägermedien bereits unter Berücksichtigung des geplanten Einsatzgebietes aus. Zum Beispiel werden für den Einsatz in wasserverdünnbaren Lacksystemen oder zur Belegung von Pigmenten in wässriger Suspension nach der Pigmentsynthese bevorzugt Lösemittel eingesetzt, die ganz oder teilweise wasserverdünnbar sind. Sollen das Verfahrensprodukt zum Beispiel dort eingesetzt werden, wo die Anwesenheit von flüchtigen organischen Verbindungen (VOC) nicht erwünscht ist, so sollte die Formulierung möglichst lösemittelfrei oder in entsprechend als VOC-frei geltenden Trägermaterialien vorliegen.

Je nach Anwendungsgebiet können die zur Synthese verwendeten Lösemittel im Reaktionsgemisch verbleiben oder werden ganz oder teilweise entfernt und gegebenenfalls durch andere Lösemittel oder Trägermedien ersetzt werden. Das Lösemittel kann zum Beispiel durch Abdestillieren, gegebenenfalls bei reduziertem Druck und/oder azeotrop unter Zusatz von Wasser, ganz oder teilweise entfernt werden. Die Wirksubstanz (Verbindung der allgemeinen Formel IV) kann aber auch durch Ausfällen mittels Zusatz von Nichtlösern wie aliphatischen Kohlenwasserstoffen, beispielsweise Hexan, anschließendes Abtrennen durch Filtration und gegebenenfalls Trocknen isoliert werden. Die nach einer dieser Methoden erhaltene Wirksubstanz kann dann in einem für das jeweilige Anwendungsgebiet geeigneten Lösemittel angelöst werden oder gegebenenfalls in reiner Form beispielsweise bei Pulverlacken, eingesetzt werden oder auf inerte Träger aufgezogen werden. Für Anwendungen, bei denen die Verwendung von Feststoffen bevorzugt ist, wie Pulverlacke oder bestimmte Kunststoffverarbeitungsverfahren, können die Verbindungen auch durch weitere bekannte Verfahren in eine feste Form überführt werden. Beispiele für solche Verfahren sind Mikroverkapselung, Sprühtrocknung, Adsorption auf einen festen Träger wie SiO₂ oder das PGSS-Verfahren (Particle from Gas Saturated Solutions). Die in der Stufenabfolge iii-b) des erfindungsgemäßen Verfahrens eingesetzten Verbindungen, welche mindestens eine gegenüber Isocyanaten reaktive Gruppe HX sowie mindestens eine weitere funktionelle Gruppe Q (liegt besonders bevorzugt als OH vor) enthalten, weisen in der Regel die nachstehenden allgemeinen Strukturen auf:

H₂N-R²-OH

HZ²N-R²-OH

HN(-R²-OH)₂

mit Z² und R² wie jeweils vorstehend beschrieben, jedoch bevorzugt mit R² gleich oder verschieden und repräsentiert durch eine verzweigte oder unverzweigte Alkylengruppe mit 2 bis12 Kohlenstoffatomen.
Konkrete Beispiele für entsprechende OH-funktionelle Amine sind Ethanolamin, Propanolamin, iso-Propanolamin, 5-Aminopentanol, 2-(2-Aminoethoxy)ethanol, N-Methylethanolamin, N-Ethylethanolamin, N-Butylethanolamin, Diethanolamin, 3-((2-Hydroxyethyl)amino)-1-propanol, Diisopropanolamin und N-(2-Hydroxyethyl)anilin.

Entsprechende Hydroxylgruppen enthaltende Urethanharnstoffe (bzw. Diurethane) können nachfolgend mit einer esterbildenden Phosphorverbindung zu Phosphorsäureestern umgesetzt werden (gemäß Stufenabfolge iii-b - anschließende Phosphorilierung). Typischerweise erfolgt eine Umsetzung von mindestens einer Hydroxylgruppe des Harnstoffurethans mit einer esterbildenden Phosphorverbindung (als Phosphorilierungsmittel). Unter einer esterbildenden Phosphorverbindung wird eine Verbindung verstanden, die durch Umsetzung mit einer Hydroxylgruppen enthaltenden Verbindung Phosphorsäureester bilden kann. Als esterbildende Phosphorverbindungen können beispielsweise Polyphosphorsäure, Phosphorpentoxid, Phosphoroxichlorid und Acetylphosphat eingesetzt werden. Bevorzugt werden Polyphosphorsäure oder Phosphorpentoxid eingesetzt, besonders bevorzugt Polyphosphorsäure. Mit Polyphosphorsäure entstehen überwiegend Monoester und mit Phosphorpentoxid Mono/Diester-Gemische. Die Monoester sind bevorzugt. Es ist auch möglich, dass bei der Phosphorylierungsreaktion ein Gemisch verschiedener zu phosphorylierender Komponenten eingesetzt wird.

Die Reaktion der esterbildenden Phosphorverbindungen mit den Hydroxylverbindungen erfolgt vorzugsweise ohne Lösungsmittel bei Temperaturen bis 150°C, bevorzugt unter 100°C. Die Reaktion kann aber auch in Gegenwart von geeigneten inerten Lösungsmitteln durchgeführt werden (beispielsweise Methoxypropylacetat).

Durch die sauren Gruppen sind die Phosphorester zur Salzbildung befähigt. Diese können als Dispergiermittel auch in Form der entsprechenden Salze eingesetzt werden. In manchen Fällen lässt sich durch eine solche teilweise oder vollständige Versalzung eine Verbesserung der Wirksamkeit und/oder eine verbesserte Löslichkeit oder Verträglichkeit erzielen. Auch in Anwendungen, bei denen die Acidität der Produkte stört, lassen sich häufig Verbesserungen durch teilweise oder vollständige Neutralisation erreichen. Als salzbildende Verbindungen eignen sich Alkali- und Erdalkalimetallsalze, wie Carbonate, Hydrogencarbonate oder Hydroxide, niedermolekulare Amine, wie Triethanolamin, Diethylethanolamin, Dibutylethanolamin und Oleylamin. Weiterhin sind Salze der erfindungsgemäßen Phosphorsäureesterverbindungen mit polymeren Aminen analog EP- A- 0 893 155 als Netz- und Dispergiermittel möglich.

In einer bevorzugten Ausführungsform der Erfindung liegt die Kopfgruppe des Kopfgruppenrestes Z¹ somit in Form einer Phosphorsäureesterfunktion vor, wobei Schritt iii) in Form einer Stufenabfolge iii-b) durchgeführt wird und die weitere funktionelle Gruppe Q in Form einer Hydroxylgruppe und das weitere an der Erzeugung des Kopfgruppenrestes Z¹ beteiligte Reagens bevorzugt als Phosphorilierungsmittel vorliegt.

In einer typischen Ausführungsform der Erfindung weist der Kopfgruppenrest Z¹ demnach als Kopfgruppe eine Phosphorsäureesterfunktion auf, wobei Z¹ gleich oder verschieden ist sowie repräsentiert wird durch die allgemeine Formel (VII)

R²-O-PO(OR³)ₙ(OH)₂₋ₙ (VII)

mit
R² gleich oder verschieden sowie repräsentiert durch einen mindestens zwei Kohlenstoffatome aufweisenden gesättigten oder ungesättigten, verzweigten oder unverzweigten organischen Rest,
R³ gleich oder verschieden sowie repräsentiert durch einen gesättigten oder ungesättigten, verzweigten oder unverzweigten organischen Rest sowie
n gleich oder verschieden sowie repräsentiert durch 0 und/oder 1.

In der Regel ist n gleich 0 und R² bevorzugt gleich oder verschieden sowie repräsentiert durch einen gesättigten, linearen C₂-C₄₀-Alkylenrest.

Allerdings kann n gleich 1 sein und R³ dann beispielsweise repräsentiert werden durch -X-CO-NH-R¹-NH-CO-O-Y. Derartige Substitutionsmuster können insbesondere bei Einsatz spezieller Phosphorilierungsmittel, beispielsweise Phosphorylchlorid, entstehen.

In einer weiteren bevorzugten Ausführungsform der Erfindung ist die Kopfgruppe des Kopfgruppenrestes Z¹ gleich oder verschieden und liegt als tertiäre Aminofunktion oder quaternäre Ammoniumfunktion vor.

In der Stufe iii-a) des erfindungsgemäßen Verfahrens werden dann typischerweise Verbindungen der allgemeinen Formel (IV) erzeugt, die mindestens eine tertiäre Aminofunktion tragen. Diese tertiären Amine können mit Säuren, wie Carbonsäuren oder Phosphorsäuren und deren Estern, zu entsprechenden Ammoniumsalzen umgesetzt werden.

Derartige basische Verbindungen der Formel IV mit tertiären Aminogruppen können auch mit Verbindungen der Formel IV mit sauren Kopfgruppen Z¹ kombiniert werden und zwar unter teilweiser oder vollständiger Salzbildung.

Weiterhin lassen sich die tertiären Amine in Alkylierungsreaktionen mit Alkylhalogeniden, wie mit Benzylchlorid, Methyliodid, oder mit Oxiranen, wie

Alkylenoxide oder Glycidether, in Gegenwart von Säuren, wie Carbonsäuren oder Phosphorsäuren und deren Estern, in entsprechende quartäre Ammoniumsalze überführen.

Die tertiären Amine können mit Sauerstoff, Peroxoverbindungen wie Percarbonsäuren und mit Wasserstoffperoxid in Aminoxide überführt werden, die zusätzlich mit Säuren wie zum Beispiel Salzsäure versalzt werden können.

Es können OH-funktionelle Amine (mit X = OH) eingesetzt werden, welche nachstehende Struktur aufweisen:

HO-R¹²-NR¹¹₂

mit R¹² gleich oder verschieden und repräsentiert wie R².

R¹¹ ist als organischer Rest gleich oder verschieden und kann durch einen Alkylrest, Arylrest und/ oder Aralkylrest repräsentiert werden und ggf. Ester-, Ether- und tert. Aminogruppen enthalten.
Weiterhin kann der Rest -NR¹¹₂ ein gesättigter, ungesättigter oder aromatischer cyclischer oder heterocylischer Ring sein. Bevorzugt sind 5- und 6-Ringe.

Spezielle Beispiele für entsprechende OH-funktionelle tertiäre Amine sind 2-Dimethylaminoethanol, 2-Diethylaminoethanol, 3-Dimethylaminopropanol, 3-Diethylaminopropanol, Dimethylaminoethoxyethanol, N,N,N'-Trimethylaminoethylethanolamine, N,N-Dimethylisopropanolamin, N-Ethyl-N-(2-hydroxyethyl)anilin, N,N,N'-trimethyl-N'-hydroxyethyl-bisaminoethylether und N,N-bis(3-dimethylaminopropyl)-N-isopropanolamine.

Alternativ (ggf. auch zusätzlich) können Oligoamine mit X = NH oder NZ² eingesetzt werden, welche die nachstehenden allgemeinen Strukturen aufweisen:

H₂N-R¹³-NR¹¹₂

HZ²N-R¹³-NR¹¹₂

HN(-R¹³-NR¹¹₂)₂

mit R¹¹ wie vorstehend beschrieben sowie R¹³ gleich oder verschieden und repräsentiert wie R².

Entsprechende Beispiele für Oligoamine sind 2-(Diethylamino)ethylamin, 3-(Dimethylamino)propylamin, 3-(Diethylamino)propylamin, Bis(3-dimethylaminopropyl)amine und N-(3-Aminopropyl)imidazole.

Weiterhin können auch Diole mit (X = OH) eingesetzt werden, welche aufweisen die allgemeinen Struktur

HO-R¹⁴-OH

mit R¹⁴ gleich oder verschieden und repräsentiert wie R².

Bevorzugt in diesem Zusammenhang sind Alkandiole.

Normalerweise ist Z² gleich oder verschieden und wird repräsentiert durch einen optional Ethersauerstoffatome aufweisenden C₁-C₅₀-Kohlenwasserstoffrest. Alternativ kann Z² auch gleich oder verschieden sein und die Entsprechung von Z¹ aufweisen, mit der Maßgabe, dass Z¹ und Z² jeweils unabhängig voneinander repräsentiert werden (Z¹ und Z² können somit innerhalb eines Moleküls als auch im Vergleich verschiedener Molekülspezies untereinander gleich oder verschieden sein.

In einer besonders bevorzugten Ausführungsform der Erfindung ist X gleich oder verschieden und wird repräsentiert durch NH und/oder NZ².

Bevorzugt werden Z¹ und Z² jeweils unabhängig voneinander durch Reste repräsentiert, die jeweils gegenüber Isocyanaten entweder nur verhältnismäßig schwach reaktiv oder bevorzugt inert sind. Dies verhindert in der Regel die Entstehung von unerwünschten Nebenprodukten bzw. Konkurrenzreaktionen im erfindungsgemäßen Verfahren.

In einer bevorzugten Ausführungsform wird in Schritt i) das Diisocyanat der allgemeinen Formel (II) gegen über der Hydroxylkomponente (I) in einem molaren Verhältnis in einem molaren Verhältnis von mindestens (1,5 * arithmetischer Mittelwert von q) : 1,0, bevorzugt von mindestens (2,0 * arithmetischer Mittelwert von q) : 1,0 eingesetzt. Dadurch wird die Selektivität bezüglich der Erzeugung der Verbindung der allgemeinen Formel (IV) verbessert (geringerer Anteil von Nebenprodukten).

In der Regel wird in Schritt ii) wenigstens 75 Mol-%, bevorzugt wenigstens 90 Mol-%, der nicht umgesetzten Teilmenge des Diisocyanats der allgemeinen Formel (II) aus dem Reaktionsgemisch entfernt. Das Diisocyanat verschlechtert die Qualität des Verfahrensprodukts und ist als umweltschädlich anzusehen.

Üblicherweise beträgt das molare Verhältnis der in Schritt i) insgesamt umgesetzten Monohydroxyverbindungen der allgemeinen Formel (Ia) zu der Summe aus den in Schritt iii) umgesetzten Verbindungen der allgemeinen Formel (V) und den in Schritt iii) umgesetzten Verbindungen, welche aufweisen eine gegenüber Isocyanaten reaktive Gruppe HX sowie mindestens eine weitere funktionelle Gruppe Q, 0,9 bis 1,1, bevorzugt 0,95 bis 1,05. Dadurch wird die Selektivität bezüglich der Erzeugung der Verbindung der allgemeinen Formel (IV) verbessert (geringerer Anteil von Nebenprodukten).

Meist werden in Stufe iii) soviel Verbindungen der allgemeinen Formel (Va) und/oder soviel Verbindungen, welche aufweisen eine gegenüber Isocyanaten reaktive Gruppe HX sowie mindestens eine weitere funktionelle Gruppe Q, eingesetzt, dass mindestens 90 Mol-%, bevorzugt mindestens 99 Mol-% des in Stufe i) entstandenen Monoisocyanataddukts der allgemeinen Formel (IIIa) umgesetzt wird.

Normalerweise wird dann in Schritt i) das Diisocyanat der allgemeinen Formel (II) gegenüber der Monohydroxyverbindung der allgemeinen Formel (Ia) in einem molaren Verhältnis von mindestens 1,5 : 1,0, bevorzugt von 2,5 : 1 bis 20 : 1, eingesetzt.

Die Erfindung betrifft ferner eine Additivkomposition, welche gemäß vorstehend beschriebenem Verfahren herstellbar ist.

Eine besonders typische erfindungsgemäße Additivkomposition, welche erfindungsgemäß unter Einsatz von Monohydroxyverbindungen (q = 1) herstellbar ist, enthält:
i) 10 bis 99,98 Gew.-% der Verbindung gemäß der allgemeinen Formel (IVa) Y-O-CO-NH-R¹-NH-CO-X-Z¹,
ii) 0,01 bis 10 Gew.-% Diurethan gemäß der allgemeinen Formel Y-O-CO-NH-R¹-NH-CO-O-Y mit Y gleich oder verschieden,
iii) 0.01 bis 10 Gew.-% Diharnstoff der allgemeinen Formel Z¹-X-CO-NH-R¹-NH-CO-X-Z¹ mit Z¹ gleich oder verschieden sowie
iv) 0 bis 8 Gew.-% Urethan der allgemeinen Formel Y-O-CO-NH-R¹-NCO.

Die Spezies der allgemeinen Formel (IV) bzw. (IVa) können in unversalzter, teilversalzter und/oder versalzter Form vorliegen. Das Vorliegen in nicht versalzter, versalzter und/oder teilversalzter Form ist üblicherweise einerseits abhängig von der jeweiligen chemischen Umgebung (pH-Wert) und andererseits von der Art der Verbindungsspezies als solches.

Die nach dem erfindungsgemäßen Verfahren hergestellten - nicht nachbehandelten bzw. aufgereinigten - Additivkompositionen enthalten typischerweise geringe Mengen Diurethan und Diharnstoff. Entsprechend geringe Mengen des Diurethans bzw. des Diharnstoffs verursachen keinerlei Verschlechterung bezüglich einer Verwendung als Netz- und Dispergiermittel und sind ein deutlicher Hinweis darauf, dass die Additivkomposition unter Einsatz von Monohydroxyverbindungen (q = 1) mit dem erfindungsgemäßen Verfahren hergestellt worden ist. Durch den Einsatz entsprechender Mengen des Amins im zweiten Schritt des erfindungsgemäßen Verfahrens kann der Anteil des Urethans der allgemeinen Formel Y-O-CO-NH-R¹-NCO in der Regel zumindest fast gegen Null reduziert werden, was für die Qualität der erfindungsgemäßen Additivkompositionen meist vorteilhaft ist. Die erfindungsgemäße Additivkomposition ist umweltfreundlich, gut lagerfähig und zeigt - entsprechend wie die erfindungsgemäßen Phosphorsäurederivate als solches - ausgezeichnete Eigenschaften als Netz- und Dispergiermittel.

Weitere Komponenten der erfindungsgemäßen Additivkomposition können beispielsweise Lösemittel oder Lithiumsalze sein.

Die vorliegende Erfindung betrifft weiterhin die Verwendung der vorstehend beschriebenen Additivkomposition als Additiv, bevorzugt als Netz- und Dispergiermittel, in Beschichtungen, insbesondere Lacken, Kunststoffen, Pigmentpasten, Dichtstoffen, Kosmetika, Keramik, Klebstoffen, Vergussmassen, Spachtelmassen, Druckfarben und Tinten.

Außerdem betrifft die Erfindung ein Feststoffgemenge, welches Partikel und/oder Fasern enthält, die mit der vorstehend beschriebenen Additivkomposition behandelt worden sind.

Schließlich betrifft die Erfindung einen Lack und/oder Kunststoff, welcher die erfindungsgemäße Additivkomposition enthält.

Die erfindungsgemäße Additivkomposition findet beispielsweise als Aluminiumpassivator, Dispergiermittel, Dispersionsstabilisator oder Netzmittel Verwendung und lässt sich beispielsweise in pigmentierten und/oder füllstoffhaltigen Produkten, beispielsweise Pigmentkonzentraten oder -pasten, Beschichtungszusammensetzungen, Dichtstoffen, Kunststoffen, Keramiken, Kosmetika, Klebstoffen, Vergussmassen, Spachtelmassen, Druckfarben und/oder Tinten einsetzen. Bevorzugt sind Pigmentkonzentrate, die mit entsprechenden Auflacksystemen gemischt werden können, wodurch pigmentierte Lacke hergestellt werden.

So können erfindungsgemäße Additivkompositionen beispielsweise bei der Herstellung oder Verarbeitung von Lacken, Druckfarben, Tinten, beispielsweise für Tintenstrahldruck, Papierstrich, Leder- und Textilfarben, Pasten, Pigmentkonzentraten, Keramiken, Kleb- und Dichtstoffen, Vergussmassen, Kunststoffen und kosmetischen Zubereitungen eingesetzt werden, insbesondere, wenn diese Feststoffe wie Pigmente und/oder Füllstoffe (auch faserförmige) enthalten.

Auch bei der Herstellung oder Verarbeitung von Formmassen auf Basis von synthetischen, halbsynthetischen oder natürlichen makromolekularen Stoffen, wie Polyvinylchlorid, gesättigten oder ungesättigten Polyestern, Polyurethanen, Polystyrolen, Polyacrylaten, Polyamiden, Epoxidharzen, Polyolefinen, wie Polyethylen oder Polypropylen, können diese eingesetzt werden. Beispielsweise lassen sich diese zur Herstellung von Vergussmassen, Gießmassen, PVC-Plastisolen, Gelcoats, Polymerbeton, Leiterplatten, Industrielacken, Holz- und Möbellacken, Fahrzeuglacken, Schiffsfarben, Korrosionsschutzfarben, Can- und Coil-Coatings oder Maler- und Bautenlacken verwenden.

Die erfindungsgemäße Additivkompositionen können nicht nur in Auflacksystemen für pigmentierte Lacke eingesetzt werden. Ebenfalls möglich ist der Einsatz in einem weiten Bereich von Formulierungen bzw. Produkten, wie Harzen, Ölen, Fetten, Gleitmitteln, Gummimaterialien, Dichtstoffen, Druckfarben, Tinten, Klebstoffen, Wachsen oder Beschichtungsmittelzusammensetzungen. Die Konzentrate können auch eingesetzt werden in Formulierungen, die in der Körperpflegeindustrie hergestellt werden oder in elektrischen Anwendungen in der Elektronikindustrie, in der Schiffsindustrie, im Rahmen medizinischer Anwendungen, in der Bauindustrie oder in der Automobilindustrie. Beispiele schließen elektronisches Papier, wie das Display bei E-Books, die Verkapselung mikroelektronischer Chips und Leiterplatten, Unterwasserbootshautbeschichtungen, wie Anti-Fouling-Beschichtungen, Silikonröhren oder Gleitadditive für Bremskomponenten ein.

Die erfindungsgemäßen Additivkompositionen können vorteilhaft auch bei der Herstellung von Farbfiltern für Flüssigkristallanzeigen, Flüssigkristallbildschirme, Farbauflösungsgeräte, Sensoren, Plasmabildschirmen, Anzeigen auf Basis der SED (Surface conduction Electron emitter Display) und für MLCC (Multi Layer Ceramic Compounds) eingesetzt werden. Die MLCC-Technologie wird bei der Herstellung von Mikrochips und Leiterplatten angewendet.

Die Verwendung in kosmetischen Präparaten kann beispielsweise zur Herstellung kosmetischer Zubereitungen wie Make-up, Puder, Lippenstifte, Haarfärbemittel, Cremes, Nagellacke und Sonnenschutzpräparaten dienen. Diese können in den üblichen Formen, beispielsweise als W/O- oder O/W-Emulsionen, Lösungen, Gele, Cremes, Lotionen oder Sprays vorliegen. Die erfindungsgemäßen Additivkompositionen können vorteilhaft in zur Herstellung dieser Zubereitungen verwendeten Dispersionen eingesetzt werden. Diese können die für diese Zwecke in der Kosmetik üblichen Trägermedien, wie Wasser, Ricinusöle oder Silikonöle und Feststoffe, wie organische und anorganische Pigmente, wie Titandioxid oder Eisenoxid, enthalten.

Zu nennen sind ebenfalls die Anwendungsbereiche NIP (Non impact printing), InkJet (auf Papier, Folie, Keramik, künstlichem und natürlichem Fasergewebe), Dispergieren von Keramik (wässrig oder wasserfrei), Dispergieren in Vergussmassen. Die erfindungsgemäßen Additivkompositionen können auch als solches, d.h. ohne zuvor in ein entsprechendes Konzentrat eingearbeitet worden zu sein, in den zuvor genannten Formulierungen und Anwendungsbereichen zum Einsatz kommen.

Typischerweise ist das Phosphorsäureesterderivate sowie Pigment- und/oder Füllstoffe enthaltende Produkt ein Lack, oder ein Pigmentkonzentrat für Beschichtungszusammensetzungen. Letztlich aber ist der Einsatz der Phosphorsäureesterderivate in beliebigen pigmenthaltigen und/oder füllstoffhaltigen Produkten möglich.

Insbesondere handelt es sich bei den Pigmentkonzentraten um Zusammensetzungen, die neben der erfindungsgemäßen Additivkomposition beispielsweise organische Lösemittel und mindestens ein Pigment enthalten. Diese enthalten insbesondere keine oder nur geringe Anteile organischer Polymere als Bindemittel. Solche bekannten Bindemittel sind vorteilhafterweise in den entsprechenden Auflacksystemen vorhanden und werden nachstehend beschrieben. Als organische Lösemittel kommen insbesondere die typischen im Bereich der Lack-und Farbindustrie eingesetzten, dem Fachmann bekannten organischen Lösemittel, wie aliphatische Lösemittel, cycloaliphatische Lösemittel, aromatische Lösemittel, wie Toluol, Xylol, Solventnaphtha, Ether, Ester und/oder Ketone, beispielsweise Butylglykol, Butyldiglykol, Butylacetat, Methylisobutylketon, Methylethylketon und/oder Lösemittel, wie Methoxypropylacetat, Diacetonalkohol, zum Einsatz.

Als Pigmente kommen die dem Fachmann bekannten Pigmente zu Einsatz. Beispiele für Pigmente sind Mono-, Di-, Tri- und Polyazopigmente, Oxazin-, Dioxazin-, Thiazin-Pigmente, Diketo-pyrrolo-pyrrole, Phthalocyanine, Ultramarin und andere Metallkomplex-Pigmente, indigoide Pigmente, Diphenylmethan-Pigmente, Triarylmethan-Pigmente, Xanthen-Pigmente, Acridin-Pigmente, Chinacridon-Pigmente, Methin-Pigmente, Anthrachinon, Pyranthron-, Perylen-Pigmente und andere polycyclische Carbonylpigmente, anorganische Pigmente, wie Carbon Black Pigmente und/oder Pigmente auf Basis von Russ, Graphit, Zink, Titandioxid, Zinkoxid, Zinksulfid, Zinkphosphat, Bariumsulfat, Lithophone, Eisenoxid, Ultramarin, Manganphosphat, Cobaltaluminat, Cobaltstannat, Cobaltzinkat, Antimonoxid, Antimonsulfid, Chromoxid, Zinkchromat, gemischten Metalloxiden auf Basis von Nickel, Bismut, Vanadium, Molybdän, Cadmium, Titan, Zink, Mangan, Cobalt, Eisen, Chrom, Antimon, Magnesium, Aluminium (beispielsweise Nickeltitangelb, Bismutvanadat-molybdatgelb oder Chromtitangelb), magnetischen Pigmenten auf Basis von Reineisen, Eisenoxiden und Chromoxiden oder Mischoxiden, Metalleffektpigmente aus Aluminium, Zink, Kupfer oder Messing sowie Perlglanzpigmente oder fluoreszierende und phosphoreszierende Leuchtpigmente. Weitere Beispiele sind nanoskalige organische oder anorganische Feststoffe mit Teilchengrößen unterhalb von 100 nm in mindestens einer Dimension, wie bestimmte Russtypen oder andere allotrope Formen des Kohlenstoffs, wie single-wall-CNT's, multi-wall-CNT's und Graphen. Die Bestimmung der Teilchengröße erfolgt bspw. mittels Transmissionselektronenmikroskopie, analytischer Ultrazentrifugation oder Methoden der Lichtstreuung. Ebenfalls zu nennen sind Partikel, die aus einem Metall-, oder Halbmetalloxid bzw. -hydroxid bestehen, sowie Partikel, die aus gemischten Metall- und/oder Halbmetalloxiden bzw. -hydroxiden bestehen. Beispielsweise lassen sich die Oxide und/oder Oxidhydroxide des Aluminiums, Siliziums, Zinks, Titans, usw. zur Herstellung solcher extrem feinteiligen Feststoffe heranziehen. Der Herstellprozess dieser oxidischen bzw. hydroxidischen bzw. oxidhydroxidischen Teilchen kann über die unterschiedlichsten Verfahren wie bsp. Ionenaustauschprozesse, Plasmaprozesse, Sol-Gel-Verfahren, Ausfällung, Zerkleinerung (beispielsweise durch Vermahlung) oder Flammhydrolyse erfolgen. Alle vorstehend genannten Pigmente können oberflächenmodifiziert vorliegen und basische, saure oder neutrale Gruppen an der Oberfläche besitzen.

Enthalten die jeweiligen Produkte, insbesondere die Beschichtungszusammensetzungen, Füllstoffe, so handelt es sich z.B. um die dem Fachmann bekannten Füllstoffe. Beispiele für pulver- oder faserförmige Füllstoffe sind zum Beispiel solche, die aufgebaut sind aus pulver- oder faserförmigen Teilchen von Aluminiumoxid, Aluminiumhydroxid, Siliziumdioxid, Kieselgur, Kieselerde, Quarz, Kieselgel, Talkum, Kaolin, Glimmer, Perlite, Feldspat, Schiefermehl, Calciumsulfat, Bariumsulfat, Calciumcarbonat, Calcit, Dolomit, Glas oder Kohlenstoff. Die eingesetzten Fasern können organischer und/oder anorganischer Natur sein und ebenso als Verstärkungsstoffe eingesetzt werden. Weitere Beispiele für Pigmente oder Füllstoffe finden sich beispielsweise in der US-A-4,795,796. Auch Flammschutzmittel, sofern die erfindungsgemäßen Verbindungen nicht bereits in üblichen Additivmengen für diesen Zweck eingesetzt werden, wie Aluminium- oder Magnesiumhydroxid und Mattierungsmittel, wie Kieselsäuren, lassen sich ebenfalls besonders gut durch die erfindungsgemäßen Netz- und Dispergiermittel dispergieren und stabilisieren.

Die erfindungsgemäßen Additivkompositionen eignen sich insbesondere auch zur Herstellung von Feststoffkonzentraten, wie Pigmentkonzentraten. Dazu werden die erfindungsgemäßen Phosphorsäureesterderivate in einem Trägermedium wie organischen Lösemitteln, Weichmachern und/oder Wasser vorgelegt und die zu dispergierenden Feststoffe werden unter Rühren zugegeben. Zusätzlich können diese Konzentrate Bindemittel und/oder andere Hilfsstoffe enthalten. Mit den erfindungsgemäßen Additivkompositionen ist es aber insbesondere möglich, stabile bindemittelfreie Pigmentkonzentrate herzustellen. Ebenso ist es möglich, mit den erfindungsgemäßen Additivkompositionen fließfähige Feststoffkonzentrate aus Pigmentpresskuchen herzustellen. Hierbei wird dem Presskuchen, der noch organische Lösemittel, Weichmacher und/oder Wasser enthalten kann, die erfindungsgemäße Verbindung zugemischt und die so erhaltene Mischung dispergiert. Die auf verschiedenen Wegen hergestellten Feststoffkonzentrate können dann in unterschiedliche Substrate wie z.B. Alkydharze, Polyesterharze, Acrylatharze, Polyurethanharze oder Epoxidharze eingearbeitet werden. Pigmente können aber auch lösemittelfrei direkt in den erfindungsgemäßen Additivkompositionen dispergiert werden und eignen sich dann besonders zur Pigmentierung von thermoplastischen und duroplastischen Kunststoffformulierungen.

Je nach Einsatzgebiet werden die erfindungsgemäßen Additivkompositionen in solchen Mengen eingesetzt, dass in dem letztlich für die weitere Anwendung interessanten Produkt vorteilhaft ein Anteil des erfindungsgemäßen Netz- und Dispergiermittels von 0,01 bis 10 Gew.-%, bezogen auf die Gesamtmenge des jeweiligen Produkts, besteht. Möglich sind aber auch höhere Anteile.

Bezogen auf den zu dispergierenden Feststoff, beispielsweise das Pigment, wird die erfindungsgemäße Additivkompositionen in einer Menge von bevorzugt 0,5 bis 100 Gew.-% eingesetzt. Werden schwer zu dispergierende Feststoffe verwendet, kann die Menge an eingesetztem erfindungsgemäßen Netz- und Dispergiermittel durchaus höher sein. Die Menge an Dispergiermittel ist im Allgemeinen abhängig von der zu belegenden Oberfläche des zu dispergierenden Stoffes. Von Bedeutung kann also beispielsweise sein, um welches Pigment es sich handelt. Allgemein lässt sich sagen, dass zur Dispergierung anorganischer Pigmente meist weniger Dispergiermittel notwendig ist als für organische Pigmente, da letztere meist über eine höhere spezifische Oberfläche verfügen und von daher eine größere Menge an Dispergiermittel nötig ist. Typische Dosierungen des Netz- und Dispergiermittels für anorganische Pigmente liegen beispielsweise bei 1 bis 20 Gew.-%, für organische Pigmente bei 10 bis 50 Gew.-%, jeweils bezogen auf den zu dispergierenden Feststoff, insbesondere das Pigment. Bei sehr feinteiligen Pigmenten (beispielsweise einigen Rußen) sind auch Zugabemengen von 30 bis 90% oder mehr nötig. Als Kriterien für eine ausreichende Pigmentstabilisierung können beispielsweise Glanz und Transparenz der Beschichtungszusammensetzungen oder der Grad des Ausschwimmens herangezogen werden. Die Dispergierung der Feststoffe kann als Einzelanreibung erfolgen oder auch als Gemischanreibung mit mehreren Pigmenten gleichzeitig, wobei die besten Ergebnisse in der Regel bei Einzelanreibungen zu erreichen sind. Bei der Verwendung von Mischungen verschiedener Feststoffe kann es durch gegensätzliche Ladungen auf den Feststoffoberflächen verstärkt zu Agglomerationen in der flüssigen Phase kommen. In diesen Fällen lässt sich bei Einsatz der erfindungsgemäßen Phosphorsäureesterderivate häufig eine gleichnamige, in der Regel positive, Ladung aller Teilchen erreichen und damit Instabilitäten durch Ladungsunterschiede vermeiden. Ihre optimale Wirkung erzielen die Dispergiermittel bei Zugabe zum Mahlgut, insbesondere, wenn zunächst der zu dispergierende Feststoff nur mit dem Additiv und gegebenenfalls Lösemitteln gemischt wird ("Premix"), da dann das Additiv bevorzugt auf die Feststoffoberfläche adsorbieren kann, ohne in Wettbewerb mit den Bindemittel-Polymeren treten zu müssen. In der Praxis ist diese Vorgehensweise aber nur in Ausnahmefällen nötig. Bei Bedarf können die erfindungsgemäßen Additivkompositionen auch nachträglich eingesetzt werden (als sogenannte "Post-Additive"), zum Beispiel um in einem fertig aufgelackten Ansatz Ausschwimm- oder Flockulationsprobleme zu lösen. In der Regel sind in diesem Fall aber erhöhte Additiv-Dosierungen erforderlich.

Die Produkte, insbesondere die Beschichtungszusammensetzungen beziehungsweise Lacke, in denen die erfindungsgemäßen Additivkompositionen letztlich ihre Wirkungen entfalten sollen, können zudem ein organisches Polymer als Bindemittel enthalten. Solche Bindemittel sind dem Fachmann bekannt. Dieses mindestens eine Bindemittel kann beispielsweise über ein Auflacksystem eingeführt werden, welches beispielsweise mit einem Pigmentkonzentrat, enthaltend die erfindungsgemäßen Phosphorsäureesterderivate, gemischt wird, so dass es sich bei dem betrachteten Produkt um einen pigmentierten Lack handelt. Möglich sind aber auch andere pigmentierte und/oder füllstoffhaltige Produkte, beispielsweise Kunststoffe, Dichtstoffe und weitere dem Fachmann bekannte Produkte auf Basis einer organischen polymeren Matrix. Als Produkt ist ein System anzusehen, welches ein polymeres Harz beziehungsweise organisches Polymer als Bindemittel enthält und dadurch in der Lage ist, unter geeigneten Härtungsbedingungen eine feste organische, polymere Matrix zu bilden (beispielsweise eine Beschichtungszusammensetzung). Ebenfalls als Produkt wird ein System bezeichnet, dass durch einfache Vermischung mit einer Komponente, welche ein Bindemittel enthält, zur Bildung einer solchen organischen, polymeren Matrix fähig ist (beispielsweise ein Pigmentkonzentrat). Zum Einsatz kommen beispielsweise, aber nicht ausschließlich die dem Fachmann bekannten Alkydharze, Polyesterharze, Acrylatharze, Polyurethanharze, Cellulosenitrate, Celluloseacetobutyrate, Melamine, Chlorkautschuken und/oder Epoxidharze. Beispiele für Beschichtungen auf Wasserbasis sind kathodische oder anodische Elektrotauchlackierungen z.B. für Automobilkarossen. Weitere Beispiele sind Putze, Silikatfarben, Dispersionsfarben, Wasserlacke auf Basis von wasserverdünnbaren Alkyden, Alkydemulsionen, Hybridsystemen, 2-Komponenten-Systemen, Polyurethan- und Acrylat-Dispersionen. Möglich sind sowohl 1-Komponentensysteme als auch 2-Komponentensysteme, wobei im letzteren Fall in der Regel noch Polyisocyanate, Melaminharze und/oder Polyamidharze als die typischen, dem Fachmann geläufigen Vernetzungsmittel in einer zweiten Komponente vorhanden sind. Bevorzugt sind Produktssysteme, insbesondere Beschichtungszusammensetzungen, die eine Acrylatharz als Bindemittel enthalten. In einer weiteren Variante handelt es sich um eine 2-Komponenten (2K) Beschichtungszusammensetzung bzw. einen 2K-Lack, der ein Epoxidharz in der Bindemittelkomponente und ein Polyamidharz in der Vernetzerkomponente enthält.

Die als Produkte bevorzugten Beschichtungszusammensetzungen können wasserbasierend oder lösemittelbasierend sein. Unter wasserbasierend ist zu verstehen, dass die Beschichtungszusammensetzung als Lösemittel hauptsächlich Wasser enthält. Insbesondere sind bei einer wasserbasierenden Beschichtungszusammensetzung nicht mehr als 10 Gew.-% organische Lösemittel, bezogen auf die Gesamtmenge an Lösemitteln, in der Beschichtungszusammensetzung enthalten. Als lösemittelbasierend gilt eine Beschichtungszusammensetzung, die nicht mehr als 5 Gew.-%, bevorzugt nicht mehr als 2 Gew.-% Wasser, bezogen auf die Gesamtmenge an Lösemitteln enthält.

Als weitere Produktkomponenten kommen beispielsweise in Frage Photoinitiatoren, Entschäumer, Netzmittel, filmbildende Hilfsmittel, wie Cellulose-Derivate (beispielsweise Cellulosenitrate, Celluloseacetate, Celluloseacetobutyrat), Reaktivverdünner, Verlaufmittel, Dispergiermittel, und/oder rheologiesteuernde Additive.

Die Herstellung der als Produkte bevorzugten Pigmentkonzentrate und Beschichtungszusammensetzung erfolgt über die dem Fachmann geläufigen Verfahren. Es kommen die bekannten Methoden zum Einsatz, wie beispielsweise die schrittweise Zugabe unter Rühren und Vermischung der Bestandteile der Beschichtungszusammensetzung in üblichen Mischaggregaten, wie Rührkessel oder Dissolver.

Unter Verwendung der bevorzugten Pigmentkonzentrate und Beschichtungszusammensetzungen können Beschichtungen bzw. Lackschichten hergestellt werden. Die Herstellung der Beschichtung erfolgt über die dem Fachmann geläufigen Applikationstechniken auf ein Substrat und anschließende Härtungsverfahren.

Die Applikation erfolgt beispielsweise durch die bekannten Spritz-, Sprüh-, Streich-, Roll-, Giess-, Tränk- und/oder Tauchverfahren. Nach der Applikation der Beschichtungszusammensetzung auf ein Substrat erfolgt die Härtung beziehungsweise Trocknung nach gängigen Methoden. Z.B. kann die applizierte Beschichtungszusammensetzung physikalisch trocknend, thermisch und/oder unter Anwendung aktinischer Strahlung (strahlenhärtend), vorzugsweise UV-Strahlung sowie Elektronenstrahlung härtbar sein. Die thermische Härtung kann beispielsweise im Bereich von etwa 10°C bis etwa 400 °C, je nach Art der Beschichtungszusammensetzung und/oder des Substrats, erfolgen. Auch die Dauer der Härtung ist individuell beispielsweise von der Art des Härtungsverfahrens (thermisch oder aktinisch), der Art der eingesetzten Beschichtungszusammensetzung und/oder den Substraten abhängig. Dabei kann das Substrat bewegt werden oder auch ruhen.

Neben der vorstehend beschriebenen Anwendung als Dispergiermittel und/oder Beschichtungsmittel für pulver- und faserförmige Feststoffe können die erfindungsgemäßen Additivkompositionen auch als Viskositätsreduzierer und Kompatibilisatoren in Kunstharzen eingesetzt werden. Beispiel für solche Kunstharze sind die sogenannten "sheet molding compounds" (SMC) und "bulk molding compounds" (BMC), die aus stark füllstoff- und faserhaltigen ungesättigten Polyesterharzen bestehen. Ihre Herstellung und Verarbeitung ist beispielhaft in der US-A-4,777,195 beschrieben. Ein Problem bei SMC- und BMC-Kunstharzmischungen besteht darin, dass oftmals Polystyrol (PS) der Formulierung zugesetzt wird, um die Schrumpfung während des Verarbeitungsprozesses zu reduzieren. PS ist nicht mit den verwendeten ungesättigten Polyesterharzen verträglich und es kommt zur Separation der Komponenten. Bei Verwendung von PS-gefüllten SMC- oder BMC-Mischungen können die erfindungsgemäßen Phosphorsäureesterderivate aufgrund ihrer guten Dispergierqualitäten eine Kompatibilisierung zwischen PS und ungesättigtem Polyesterharz herbeiführen, wodurch sich die Lagerstabilität und Verarbeitungssicherheit solcher Mischungen erhöht.

Mittels der erfindungsgemäßen Additivkompositionen können z.B. in unverträglichen Polyol-Mischungen, Polyol-Isocyanat-Mischungen oder Polyol-Treibmittelmischungen (werden z.B. bei der Polyurethan-Herstellung eingesetzt) Phasenvermittlungseffekte erzielt werden.

Im Folgenden wird die vorliegende Erfindung durch nachstehende Beispiele zusätzlich erläutert.

### BEISPIELE

Bei molekular uneinheitlichen Substanzen stellen die angegebenen Molekulargewichte Durchschnittswerte des Zahlenmittels dar. Die Molekulargewichte beziehungsweise zahlenmittleren Molekulargewichte Mₙ werden bei Vorhandensein titrierbarer Hydroxy- oder Amino-Gruppen durch Endgruppenbestimmung über die Ermittlung der OH-Zahl beziehungsweise der Amin-Zahl bestimmt. Bei Verbindungen auf die eine Endgruppenbestimmung nicht anwendbar ist wird das zahlenmittlere Molekulargewicht mittels Gelpermeationschromatographie gegen einen Polystyrolstandard bestimmt.

Sofern nicht anders ausgeführt, handelt es sich bei Angaben in Teilen um Gewichtsteile und bei Angaben in Prozenten um Gewichtsprozente.

Der freie NCO-Gehalt der zum Einsatz kommenden Polyisocyanate sowie der Reaktionsverlauf der NCO-Additionen wird nach EN ISO 9369 durch Abreaktion mit Butylamin und anschließende Titration des Aminüberschusses bestimmt. Diese Methoden sind auch beschrieben bei Saul Patai "The Chemistry of Cyanates and their Thioderivates", Part 1, Chapter 5, 1977.

### Herstellung des Polvether-Polvesters Y1, Mn 780

350 g MPEG 350 (Methoxypolyethylenglykol, Mn 350), 434 g -Caprolacton und 1 g DBTL (Dibutylzinndilaurat) werden bei 160 °C zur Reaktion□ gebracht bis ein Festkörper von > 95 % erreicht ist.
Die OH-Zahl des Reaktionsproduktes beträgt 72 mg KOH/g.

### Herstellung eines siloxanhaltigen epsilon-Caprolacton-Polyesters Y2, Mn 2800

35 g eines alpha,omega-hydroxyalkylfunktionellen Dimethylpolysiloxans mit einem Gesamtmolekulargewicht von ca. 900 g/mol werden mit 75 g epsilon-Caprolacton zur Reaktion gebracht. Hierzu lässt man das Gemisch unter Zusatz von 0,035 g DBTL bei 160°C in einer N2-Atmosphäre ca. 8 Stunden reagieren. Die Reaktion ist beendet, wenn der Gehalt an nichtflüchtigen Anteilen grösser als 98 % ist. Das alpha,omega-hydroxyalkylfunktionelle Dimethylpolysiloxan als Startalkohol gewinnt man in dem Fachmann bekannter Weise, durch Addition von geeigneten ungesättigten Alkoholen (wie z.B. der, in diesem Beispiel verwendete Allylalkohol) an Dimethylpolysiloxane, die endständige Silaneinheiten tragen.

Die weiteren als Y-OH verwendeten hydroxyfunktionellen Polyester werden auf analoge Weise hergestellt.

### Allgemeine Herstellvorschrift der Monoaddukte:

In einem mit Rührer, Thermometer, Tropftrichter, Rückflusskühler und Stickstoffeinleitungsrohr versehenen Vierhalskolben werden 430 g Desmodur T 100 (ca. 100% 2,4-Toluylendüsocyanat, NCO-Gehalt = 48,8) und 7g Benzoylchlorid vorgelegt und gut durchmischt. X g der Alkoholkomponente, die wasserfrei und bei Polyethern alkalifrei ist, werden langsam zudosiert, so dass die Temperatur 55 °C nicht übersteigt. Das Gemisch wird nach der Zudosierung weitere 3 Stunden bei 55°C gerührt. Das überschüssige TDI wird mittels Dünnschichtverdampfer bei 150 °C aus dem Reaktionsgemisch entfernt. Der Rest-TDI-Gehalt beträgt < 1 %.

| Monoaddukt | Alkoholkomponente | Menge X in [g] |
|---|---|---|
| **M1** | Butanolgestarteter PO-Polyether Mn 800, OH-Zahl: 70 mg KOH/g | 800 |
| **M2** | MPEG 350, OH-Zahl: 162 mg KOH/g | 350 |
| **M3** | Butanolgestarteter EO/PO-Polyether (EO:PO 1:1) Mn 2240, OH-Zahl: 25 mg KOH/g | 2240 |
| **M4** | Polyester Y1, OH-Zahl: 72 mg KOH/g | 780 |
| **M5** | Hexadecanolgestarteter Monohydroxyfunktioneller ε-Caprolactonpolyester, Mn 600 | 600 |
| **M6** | Hexadecanolgestarteter Monohydroxyfunktioneller ε-Caprolactonpolyester, Mn 1200 | 1200 |
| **M7** | MPEG 500 = Methoxypolyethylenglykol, Mn 500 | 500 |
| **M8** | Butanolgestarteter EO/PO-Polyether (EO:PO 1:1) Mn 1100 | 1100 |
| **M9** | B11/50 = Butanolgestarteter EO/PO-Polyether (EO:PO 1:1) Mn 1700 | 1700 |
| **M10** | Butanolgestarteter EO/PO-Polyether (EO:PO 1:1) Mn 2000 | 2000 |
| **M11** | Butanolgestarteter EO/PO-Polyether (EO:PO 1:1) Mn 3100 | 3100 |
| **M12** | Butanolgestarteter EO/PO-Polyether (EO:PO 1:1) Mn 4800 | 4800 |
| **M13** | Hydroxyethylacrylatgestarteter ε-Caprolactonpolyester, Mn 1200 | 1200 |
| **M14** | Monohydroxyfunktionelles Hydroxypropyl-polydimethylsiloxan mit Butylendgruppe, Mn 1200 | 1200 |
| **M15** | Methanolgestarteter EO/PO-Polyether (EO:PO 3:1), Mn 1400 | 1400 |
| **M16** | MPEG 500-gestarteter ε-Caprolactonpolyester Mn 900 | 900 |
| **M17** | iso-Decanolgestarteter ε-Caprolactonpolyester Mn 700 | 700 |
| **M18** | iso-Decanolgestarteter ε-Caprolactonpolyester Mn 1000 | 1000 |
| **M19** | Monophenylglykolgestarteter ε-Caprolactonpolyester Mn = 1200 | 1200 |
| **M20** | n-Butanolgestarteter ε-Caprolactonpolyester, Mn = 600 | 600 |
| **M21** | n-Butanolgestarteter ε-Caprolactonpolyester, Mn = 1200 | 1200 |
| **M22** | Butanolgestarteter PO-Polyether, Mn 1100 | 1100 |
| **M23** | iso-Decanolgestarteter Polyester aus ε-caprolacton und δ-Valerolacton im molaren Verhältnis 3:1, Mn = 2000 | 2000 |
| **M24** | B11/50-gestarteter ε-Caprolactonpolyester, mittleres Molekulargewicht Mn = 2000 | 2000 |
| **M25** | MPEG 350-gestarteter ε-Caprolactonpolyester Mn 900 | 900 |
| **M26** | MPEG 350-gestarteter Polyester aus ε-Caprolacton und δ-Valerolacton im molaren Verhältnis 3:1, Mn = 950 | 950 |
| **M27** | MPEG 500-gestarteter Polyester aus ε-caprolacton und δ-Valerolacton im molaren Verhältnis 3:1, Mn = 1100 | 1100 |
| **M28** | MPEG 750-gestarteter Polyester aus ε-Caprolacton und δ-Valerolacton im molaren Verhältnis 3:1, Mn = 1400 | 1400 |
| **M29** | MPEG 750 | 750 |
| **M30** | ε-Caprolactonpolyester Mn 1600, gestartet mit einem methanolgestarteten EO/PO-Polyether (EO:PO 3:1), Mn 1400 | 1600 |
| **M31** | Butanolgestarteter EO/PO-Polyether (EO:PO 1:1) Mn 3170 | 3170 |
| **M32** | Butanolgestarteter EO/PO-Polyether (EO:PO 1:1) Mn 2540 | 2540 |
| **M33** | Butanolgestarteter PO-Polyether, Mn 2240 | 2240 |
| **M34** | Butanolgestarteter Butylenoxid-Polyether, Mn 960 | 960 |
| **M35** | Alpha,omega-Dihydroxyfunktionelles Hydroxypropyl-polydimethylsiloxan, Mn 1800 | 1800 |
| **M36** | Y2, Dihydroxyfunktioneller ε-Caprolactonpolyester Mn 2800, gestartet mit einem alpha,omega-dihydroxyfunktionellen Hydroxypropyl-polydimethylsiloxan, Mn 900 | 2800 |
| **M37** | Oleylalkohol | 268 |
| **M38** | Monophenylglykol | 138 |
| **M39** | Isotridecylalohol | 200 |
| **M40** | n-Decanol | 158 |
| **M41** | Isodecanol | 158 |
| **M42** | Benzylalkohol | 108 |
| **M43** | Cyclohexanol | 100 |
| **M44** | Isobutanol | 74 |
| **M45** | Polyethylenglykol (dihydroxyfunktionell), Mn 600 | 300 |
| **M46** | Polyethylenglykol (dihydroxyfunktionell), Mn 1000 | 500 |
| **M47** | Dipropylenglykolmonomethylether | 148 |
| **M48** | Butyltriglykol | 206 |

### Allgemeine Vorschrift zur Umsetzung4 der Monoaddukte mit Aminen zu Monoadduktharnstoffen:

In einem mit Rührer, Thermometer, Tropftrichter, Rückflusskühler und Stickstoffeinleitungsrohr versehenen Vierhalskolben werden x g Monoaddukt vorgelegt und unter Rühren langsam y g Amin über 1 h zugetropft. Hierbei soll die Reaktionstemperatur nicht 50°C übersteigen. Gegebenenfalls kann während oder nach der Reaktion mit MPA verdünnt werden.

| Beispiel | Monoaddukt | Amin |
|---|---|---|
| **B1** | 90 g M1 | 12,8 g 3-Aminopropylimidazol |
| **B2** | 90 g M1 | 10,3 g DMAPA |
| **B3** | 100 g M1 | 27,7 g N,N-bis(3-dimethylaminopropyl)-N-isopropanolamin |
| **B4** | 100 g M2 | 20,4 g 3-Aminopropylimidazol |
| **B5** | 100 g M2 | 49,3 g DMAPA |
| **B6** | 100 g M2 | 39,7 g N,N-bis(3-dimethylaminopropyl)-N-isopropanolamin |
| **B7** | 17 g M3 | 0,7 g DMAPA |
| | 26 g MPA | |
| **B8** | 30 g M4 | 4,4 g 3-Aminopropylimidazol |
| | 50 g MPA | |
| **B9** | 30 g M4 | 3,5 g DMAPA |
| | 50 g MPA | |
| **B10** | 30 g M4 | 3,8 g 4-Aminomethylpyridin |
| | 50 g MPA | |
| **B11** | 770g M5 | 102 g DMAPA |
| **B12** | 1370g M6 | 102 g DMAPA |
| **B13** | 670g M7 | 102 g DMAPA |
| **B14** | 1170g M8 | 102 g DMAPA |
| **B15** | 1870g M9 | 102 g DMAPA |
| **B16** | 2170g M10 | 102 g DMAPA |
| **B17** | 3270g M11 | 102 g DMAPA |
| **B18** | 5000g M12 | 102 g DMAPA |
| **B19** | 1370 M13 | 102 g DMAPA |
| **B20** | 1370 M14 | 102 g DMAPA |
| **B21** | 1570g M15 | 102 g DMAPA |
| **B22** | 1070g M16 | 102 g DMAPA |
| **B23** | 870g M17 | 102 g DMAPA |
| **B24** | 1170g M18 | 102 g DMAPA |
| **B25** | 1370g M19 | 102 g DMAPA |
| **B26** | 770g M20 | 102 g DMAPA |
| **B27** | 1370g M21 | 102 g DMAPA |
| **B28** | 1270g M22 | 102 g DMAPA |
| **B29** | 2170g M23 | 102 g DMAPA |
| **B30** | 2170g M24 | 102 g DMAPA |
| **B31** | 1122g M26 | 145 g 1,3-Bis-(dimethylamino)-2-propanol |
| **B32** | 1122g M26 | 355 g Tetramethyliminobis-propylamin |
| **B33** | 4974g M12 | 144 g TEA |
| **B34** | 974g M1 | 102 g DMAPA |
| **B35** | 924g M29 | 102 g DMAPA |
| **B36** | 1170g M8 | 117g DEEA |
| **B37** | 1170g M8 | 89g DMEA |
| **B38** | 1274g M27 | 102 g DMAPA |
| **B39** | 1574g M28 | 102 g DMAPA |
| **B40** | 924g M29 | 89g DMEA |
| **B41** | 1774g M30 | 102 g DMAPA |
| **B42** | 3344g M31 | 102 g DMAPA |
| **B43** | 2714g M32 | 102 g DMAPA |
| **B44** | 2414g M33 | 102 g DMAPA |
| **B45** | 1134g M34 | 102 g DMAPA |
| **B46** | 2148g M35 | 102 g DMAPA |
| **B47** | 3148g M36 | 102 g DMAPA |
| **B48** | 442g M37 | 102 g DMAPA |
| **B49** | 312g M38 | 102 g DMAPA |
| **B50** | 374g M39 | 102 g DMAPA |
| **B51** | 332g M40 | 102 g DMAPA |
| **B52** | 332g M41 | 102 g DMAPA |
| **B53** | 282g M42 | 102 g DMAPA |
| **B54** | 274g M43 | 102 g DMAPA |
| **B55** | 248g M44 | 102 g DMAPA |
| **B56** | 474g M45 | 102 g DMAPA |
| **B57** | 674g M46 | 102 g DMAPA |
| **B58** | 332g M47 | 102 g DMAPA |
| **B59** | 380g M48 | 102 g DMAPA |

| | | |
|---|---|---|
| MPA = Methoxypropylacetat (Lösemittel); DMAPA = N,N Dimethylaminopropylamin TEA = Triethanolamin; DEEA = N,N-Diethylethanolamin; DMEA = N,N-Dimethylethanolamin | | |

### Herstellung eines nicht erfindungsgemäßen Veraleichsbeispiels BX1 ohne Diisocyanatüberschuß

In einem mit Rührer, Thermometer, Tropftrichter, Rückflusskühler und Stickstoffeinleitungsrohr versehenen Vierhalskolben werden 174 g Desmodur T 100 und 2,7 g Benzoylchlorid vorgelegt und gut durchmischt. 780 g Polyester Y1 werden langsam zudosiert, so dass die Temperatur 55 °C nicht übersteigt. Nach 1,5 h Nachreaktionszeit betrug der NCO-Wert 4,3. Das Reaktionsgemisch wird in 1540 g MPA angelöst. Anschließend werden 102 g DMAPA langsam über 1 h zudosiert, so dass die Temperatur 50 °C nicht übersteigt.
Nach Abkühlen war das Produkt trüb und zeigte starke Separation bei Lagerung. Das vergleichbare erfindungsgemäße Produkt B9 ist dagen nach Herstellung und bei Lagerung klar und niedrigerviskos.

### Allgemeine Vorschrift zur Umsetzung der Monoaddukte mit Aminen und Polyphosphorsäure zu Monoadduktharnstoffen:

In einem mit Rührer, Thermometer, Tropftrichter, Rückflusskühler und Stickstoffeinleitungsrohr versehenen Vierhalskolben werden x g Monoaddukt vorgelegt und unter Rühren langsam y g Aminoalkohol über 1 h zugetropft. Hierbei soll die Reaktionstemperatur nicht 50°C übersteigen. Nach einer Stunde wird die Temperatur auf 80°C erhöht und z g Polyphosphorsäure zugegeben. Die Reaktion ist nach 3 Stunden bei 80°C beendet. Gegebenenfalls kann während oder nach der Reaktion mit MPA verdünnt werden.

| Beispiel | Monoaddukt | Aminoalkohol | Polyphosphor säure in [g] |
|---|---|---|---|
| **P1** | 100g M1 | 6,9 g EA | 12,7 |
| **P2** | 100g M2 | 9,9 g EA | 16,4 |
| **P3** | 852g M25 | 61g EA | 85 |
| **P4** | 852g M25 | 105g DEA | 170 |
| **P5** | 1150g M26 | 61g EA | 85 |
| **P6** | 1150g M26 | 105g DEA | 170 |
| **P7** | 1150g M26 | 105g AEE | 85 |
| **P8** | 1072g M16 | 61g EA | 85 |
| **P9** | 1072g M16 | 105g DEA | 170 |
| **P10** | 1072g M16 | 105g DEA | 85 |
| **P11** | 1274g M27 | 105g DEA | 170 |
| **P12** | 1574g M15 | 105g DEA | 170 |
| **P13** | 1574g M28 | 105g DEA | 170 |
| **P14** | 1274g M8 | 105g DEA | 170 |
| **P15** | 974g M1 | 105g DEA | 170 |
| **P16** | 924g M29 | 105g DEA | 170 |
| **P17** | 1774g M30 | 105g DEA | 170 |
| **P18** | 4974g M12 | 105g DEA | 170 |
| **P19** | 4974g M12 | 105g DEA | 85 |
| **P20** | 4974g M12 | 144g TEA | 170 |
| **P21** | 3344g M31 | 105g DEA | 170 |
| **P22** | 2714g M32 | 105g DEA | 170 |
| **P23** | 2414g M33 | 105g DEA | 170 |
| **P24** | 1134g M34 | 105g DEA | 170 |
| **P25** | 2414g M3 | 105g DEA | 170 |
| **P26** | 954g M4 | 105g DEA | 170 |
| **P27** | 770g M5 | 105g DEA | 170 |
| **P28** | 1370g M6 | 105g DEA | 170 |
| **P29** | 670g M7 | 105g DEA | 170 |
| **P30** | 1170g M8 | 61g EA | 85 |
| **P31** | 1870g M9 | 105g DEA | 170 |
| **P32** | 2170g M10 | 105g DEA | 170 |
| **P33** | 3270g M11 | 105g DEA | 170 |
| **P34** | 5000g M12 | 61g EA | 85 |
| **P35** | 1370 M13 | 105g DEA | 170 |
| **P36** | 1370 M14 | 105g DEA | 170 |
| **P37** | 870g M17 | 105g DEA | 170 |
| **P38** | 1170g M18 | 105g DEA | 170 |
| **P39** | 1370g M19 | 105g DEA | 170 |
| **P40** | 770g M20 | 105g DEA | 170 |
| **P41** | 1370g M21 | 105g DEA | 170 |
| **P42** | 1270g M22 | 105g DEA | 170 |
| **P43** | 2170g M23 | 105g DEA | 170 |
| **P44** | 2170g M24 | 105g DEA | 170 |
| **P45** | 2148g M35 | 105g DEA | 170 |
| **P46** | 3148g M36 | 105g DEA | 170 |
| **P47** | 442g M37 | 61g EA | 85 |
| **P48** | 312g M38 | 105g DEA | 170 |
| **P49** | 374g M39 | 61g EA | 85 |
| **P50** | 332g M40 | 61g EA | 85 |
| **P51** | 332g M41 | 61g EA | 85 |
| **P51** | 282g M42 | 61g EA | 85 |
| **P53** | 274g M43 | 61g EA | 85 |
| **P54** | 248g M44 | 105g DEA | 170 |
| **P55** | 474g M45 | 105g DEA | 170 |
| **P56** | 674g M46 | 105g DEA | 170 |
| **P57** | 332g M47 | 105g DEA | 170 |
| **P58** | 380g M48 | 105g DEA | 170 |

| | | | |
|---|---|---|---|
| EA = Ethanolamin; DEA = Diethanolamin; AEE = 2-(2-Aminoethoxy)ethanol TEA = Triethanolamin | | | |

### Herstellung eines nicht erfindungsgemäßen Vergleichsbeispiels PX1

950g eines MPEG 350-gestarteten Polyesters aus ε-caprolacton und δ-Valerolacton im molaren Verhältnis 3:1, Mn = 950 und 85 g Polyphosphorsäure werden 3 Stunden bei 80°C gerührt.

### Herstellung eines nicht erfindungsgemäßen Vergileichsbeispiels PX2

950g eines butanolgestarteten EO/PO-Polyethers (EO:PO 1:1), Mn 4800 und 85 g Polyphosphorsäure werden 3 Stunden bei 80°C gerührt.

### Allgemeine Vorschrift zur Quaternisierung:

In einem mit Rührer, Thermometer, Tropftrichter, Rückflusskühler und Stickstoffeinleitungsrohr versehenen Vierhalskolben wird der Monoadduktharnstoff in 40 g MPA (Methoxypropylacetat) und 40 g Butylglykol sowie x g Alkylierungsreagenz 4 h bei 120 °C zur Reaktion gebracht. Der Festkörper wird mit einer 1:1-Mischung von MPA und Butylglykol auf 40% eingestellt.

| Beispiel | Monoadduktharnstoff | Alkylierungsreagenz |
|---|---|---|
| **Q1** | 60 g **Beisp.2** | 6,9 g Benzylchlorid |
| **Q2** | 52 g **Beisp. 2** | 14,7 g Grilonit 1814 |
| | | 6,4 g Benzoesäure |
| **Q3** | 60 g **Beisp. 5** | 9,5 g Benzylchlorid |
| **Q4** | 43 g **Beisp. 5** | 16,8 g Grilonit 1814 |
| | | 7,3 g Benzoesäure |

| | | |
|---|---|---|
| *Grilonit RV 1814 = C₁₃*/*C₁₅ -Alkylglycidylether, EMS-Chemie* | | |

### Allgemeine Vorschrift zur Salzbildung:

In einem mit Rührer, Thermometer, Tropftrichter, Rückflusskühler und Stickstoffeinleitungsrohr versehenen Vierhalskolben wird der Monoadduktharnstoff in 40 g MPA und 40 g Butylglycol mit x g Versalzungsreagenz 1 h bei 60 °C gerührt.

| **Beispiel** | **Eingesetzte Verbindung** | **Versalzungsreagenz** |
|---|---|---|
| **S1** | 1377g P9 | 234g DEEA |
| **S2** | 1377g P9 | 178 g DMEA |
| **S3** | 1377g P9 | 346g N,N-Dibutylethanolamin |
| **S4** | 1277g P10 | 117g DEEA |
| **S5** | 1480g P11 | 149g TEA |
| **S6** | 1570g P14 | 1400g Copolymer1 |
| **S7** | 1280g P15 | 1600g Copolymer2 |
| **S8** | 5280g P18 | 1400g Copolymer1 |
| **S9** | 5280g P18 | 1600g Copolymer2 |
| **S10** | 5180g P19 | 700g Copolymer1 |
| **S11** | 5180g P19 | 800g Copolymer2 |
| **S12** | 1076 g B2 | 146g Adipinsäure |
| **S13** | 52 g B2 | 6,4 g Benzoesäure |
| **S14** | 43 g B5 | 7,3 g Benzoesäure |
| **S15** | 1272g B14 | 73g Adipinsäure |
| **S16** | 1272g B14 | 282g Ölsäure |
| **S17** | 1272g B14 | 200g Laurinsäure |
| **S18** | 1272g B14 | 298g Ricinolsäure |
| **S19** | 1026g B35 | 60g Essigsäure |
| **S20** | 685g P47 | 700 Copolymer1 |
| **S21** | 520g P49 | 700g Copolymer1 |
| **S22** | 2445g P43 | 1400g Copolymer1 |
| **S23** | 2445g P43 | 700g Copolymer1 |
| **S24** | 1145g P37 | 2545g B14 |
| **S25** | 1145g P37 | 1270g B14 |
| **S26** | 2690g P25 | 120g B4 |
| **S27** | 2690g P25 | 150g B5 |
| **S28** | 590g P48 | 85g B8 |
| **S29** | 655g P58 | 85g B9 |

| | | |
|---|---|---|
| *DEEA = N,N-Diethylethanolamin; DMEA = N,N-Dimethylethanolamin* | | |

### Copolymer 1(basisches GTP-Blockcopolymer)

In einem Dreihalskolben mit Rührer, Rückflusskühler und Gaseinlass werden unter Stickstoff-Strom 69,70 g MPA bei 20°C vorgelegt und mit 7,70 g Butylmethacrylat vermischt. Dann werden 3,75 g 1-Trimethylsiloxy-1-methoxy-2- methylpropen und 0,375 g Tetrabutylammonium-m-chlorbenzoat mittels Spritze durch ein Septum zugegeben. Innerhalb von 30 min werden 60,00 g Butylmethacrylat zudosiert. Die Reaktionstemperatur steigt bis auf 40 °C und wird durch Kühlung auf diesem Niveau gehalten. Nach der Zugabe von Butylmethacrylat werden 32,80 g N.N-Dimethylaminoethylmethacrylat innerhalb von 20 min zudosiert, wobei durch Kühlung wieder sichergestellt wird, dass die Temperatur nicht über 40 °C steigt. Nach 30 min Rühren werden 3 ml Ethanol hinzugegeben. Die Monomere wurden vollständig umgesetzt (Restmonomergehalt bestimmt mittels HPLC): Produkt; Mₙ=9100 g/mol gemäß GPC.

### Copolymer 2 (basisches NMP-Blockcopolymer)

In einem Dreihalskolben mit Rührer, Rückflusskühler und Gaseinlass werden unter Stickstoff-Strom 47,2 g MPA und 3,81g 2-[N-tert-butyl-N-[1 - diethylphosphono-(2,2-dimethylpropyl)]nitroxy]-2-methylpropansäure sowie 46,00 g Butylacrylat in einen Dreihalsrundkolben vorgelegt und auf 120 °C erwärmt. Man rührt noch 2,5 h bei 120 °C. Im Anschluss werden 21 ,00 g N,N·Dimethylaminoethylmethacrylat mit einer Rate von 2 ml/min zudosiert. Hiernach wird weitere 6 h bei 120 °C gerührt; der Umsatz beträgt hiernach über 98% (Restmonomergehalt bestimmt mittels HPLC); Produkt: Mₙ=3000 g/mol gemäß GPC.

### c) Anwendungstochnische Abprütung

Verwendung der erfindungsgemäßen Polymere als Netz- und Dispergiermittel zur Herstellung von Pigmentkonzentraten und deren Einsatz in Lacksystemen

### Ausgangsstoffe

| | |
|---|---|
| Uralac SN 831 | ***Polyesterharz**,* Hersteller ***DSM*** Resins |
| Cymel 303 | *Me*/*amin-Formaldehyd-**Harz**,* Hersteller Cytec Industries |
| Dynapol Catalyst 1203 | Katalysator, Hersteller ***Evonik*** Degussa |
| Ti Pure R960 | Titandioxid-Pigment, Hersteller Du Pont |
| Aerosil R972 | Hydrophobe, pyrogene Kieselsäure, Hersteller Degussa |
| BYK 057 | Silikonfreier Polymer-Entschäumer von BYK-Chemie |
| BYK 355 | Acrylatverlaufadditiv, Hersteller BYK-Chemie |
| Solvesso 150 ND, Solvesso 100 | Aromatische Lösemittel von ExxonMobil |
| MPA | 1-Methoxy-2-propylacetat |

### Arbeitsverfahren

### Herstellung der Lacke

### Mahlbedingungen:

Gerät: Lau Paint Shaker DAS H [/A]200-K
Mahlzeit: 60 min, normale Geschwindigkeit, maximale Kühlung
Verhältnis Mahlgut zu Glasperlen (1 mm Durchmesser): 1 : 1 (Gewichtsteile)

### Zusammensetzung der Pigmentkonzentrate:

| | **Ti pure R960** | **Special black 4** |
|---|---|---|
| | | |
| Uralac SN831 | 26.2 | 44.0 |
| Additive 100%ig a.S. | 1.7 | 3.6 |
| MPA | 5.0 | 5.0 |
| Solvesso 150ND | 11.2 | 17.5 |
| Aerosil R972 | 0.6 | 0.3 |
| BYK-057 | 0.3 | |
| Ti pure R960 | 55.0 | |
| Special black 4 (Ruß, Firma Evonik) | | 12.0 |

| | | |
|---|---|---|
| Special black 4: Pigmentruß von Evonik | | |

### Herstellung der Testformulierungen

### Zusammensetzung des Klarlacks

| ***Klarlack*** | |
|---|---|
| Uralac SN 831 | 64.0 |
| Cymel 303 | 13.8 |
| Dynapol Catalyst 1203 | 4.9 |
| BYK-057 | 0.4 |
| BYK-355 | 1.1 |
| Solvesso 150 ND | 10.5 |
| MPA | 5.3 |
| 100.0 | 100.0 |

### Zusammensetzung der Testformulierungen

| | ***Weiß: Schwarz 97*:*3*** |
|---|---|
| Klarlack | 19.8 |
| Ti pure R960 | 26.5 |
| Special black 4 | 3.7 |
| | 50.0 |

Die Viskosität der Testformulierungen wurde im Anschluss an die Herstellung mit Solvesso 150ND auf 90 - 110 sec (DIN 4 -Auslaufbecher, 23°C) eingestellt.

Ein Teil der Testformulierung wird 1 Woche bei 50°C gelagert.

### Applikation der Testformulierung

Die Testformulierungen wurden am Tag der Herstellung unter den folgenden Bedingungen auf Substrate aufgetragen.

| | |
|---|---|
| Substrate: | Alcan Aluminiumbleche, vorbeschichtet mit einer |
| Rakelauftrag: | 80 µm (naß) |
| Ofentemperatur: | 320°C |
| Einbrennzeit: | 30 s |
| max. Metallltemperatur: | 235°C |
| Trockenfilmschichtdicke: | 18-20 µm |

Die Ausschwimm-, Aufschwimm- und Flokkulationseigenschaften wurden wie folgt evaluiert.

Die jeweilige Testformulierung wurde in 2 Portionen aufgeteilt.

Die jeweils erste Portion der betreffenden Testformulierung wurde mit einer Zahnscheibe bei 6000 Umdrehungen pro Minute für 1 Minute gerührt und dann unmittelbar auf die rechte Hälfte der Substratoberfläche aufgetragen. Gleichzeitig wurde auf die linke Hälfte der Substratoberfläche die jeweils zweite Portion der betreffenden Testformulierung ohne vorheriges Rühren aufgetragen.

### Rub-Out-Test

Unmittelbar nach der Applikation wurden die frisch aufgetragenen Lackschichten auf beiden Hälften der Substratoberfläche einem Rub-Out-Test unterzogen. Hierzu wurden einige Stellen der frischen Lackschichten nach dem Auftrag mechanisch verrieben und anschließend die durch das Verreiben hervorgerufene Farbtonänderung (Rub-Out-Effekt) gegenüber dem nicht verriebenen Lack gemessen. Ursachen für den Rub-Out-Effekt sind z.B. Flokkulation und/oder Aufschwimmen von Pigmenten. Falls Pigmentflokkulate vorliegen, werden diese durch die Scherwirkung beim Reiben zerstört, und es entsteht der ursprünglich angestrebte Farbton. Der Rub-Out-Effekt läßt sich durch geeignete Dispergiermittel minimieren und ist somit ein Maß für die Wirksamkeit eines Dispergiermittels.

### Farbmetrische Messungen

| | |
|---|---|
| Gerät: | Color guide, BYK-Gardner |
| Lichtart: | Normlicht D65 (Tageslicht) |
| Meßfeld: | 10° |
| Meßgeometrie: | d/8° spin (diffuse Beleuchtung, Beobachtungswinkel 8°) |
| Anzahl der Messungen: | n = 3 |

Die Ergebnisse der Farbmetrik sind in der folgenden Tabelle wiedergegeben.
Der für eine Formulierung ermittelte ΔE-Wert gibt den Farbunterschied zwischen den verriebenen und den nicht verriebenen Stellen der Beschichtung an (Rub-Out-Effekt).

Δ E 1 = Δ E nicht gerührt
Δ E 2 = Δ E gerührt
Δ E 3 = Δ E nicht gerührt / gerührt

| | **ΔE1** | **ΔE2** | **ΔE3** | **Glanz 60°** | **Viskosität des schwarzen Pigmentkonzentrates** |
|---|---|---|---|---|---|
| **Nach Anreibung** | | | | | |
| **B5** | 0,63 | 0,53 | 0,05 | 88 | niedrig |
| **B8** | 0,40 | 0,51 | 0,04 | 89 | niedrig |
| **B9** | 0,61 | 0,46 | 0,04 | 93 | niedrig |
| **B10** | 0,65 | 0,55 | 0,06 | 86 | niedrig |
| **BX1 (nicht erfindungsgemäß)** | 0,75 | 0,66 | 0,1 | 84 | hoch |
| **S6** | 0,65 | 0,59 | 0,06 | 85 | niedrig |
| **S7** | 0,64 | 0, 58 | 0,07 | 85 | niedrig |
| **S8** | 0,59 | 0,57 | 0,05 | 86 | niedrig |
| **S9** | 0,54 | 0,49 | 0,05 | 86 | niedrig |
| **P19** | 0,71 | 0,75 | 0,08 | 84 | niedrig |
| **P20** | 0,65 | 0,63 | 0,06 | 85 | niedrig |
| **PX2 (nicht erfindungsgemäß)** | 0,98 | 1,02 | 0,18 | 79 | hoch |

| **Nach 1 Woche Lagerung bei 50°C** | | | | | |
|---|---|---|---|---|---|
| **B5** | 0,60 | 0,51 | 0,05 | 88 | niedrig |
| **B8** | 0,40 | 0,51 | 0,05 | 92 | niedrig |
| **B9** | 0,39 | 0,39 | 0,07 | 96 | niedrig |
| **B10** | 0,65 | 0,55 | 0,06 | 86 | niedrig |
| **BX1** | 0,82 | 0,71 | 0,12 | 82 | hoch |
| **S6** | 0,64 | 0,58 | 0,06 | 86 | niedrig |
| **S7** | 0,62 | 0,57 | 0,06 | 84 | niedrig |
| **S8** | 0,58 | 0,59 | 0,05 | 85 | niedrig |
| **S9** | 0,52 | 0,47 | 0,05 | 87 | niedrig |
| **P19** | 0,70 | 0,74 | 0,07 | 84 | niedrig |
| **P20** | 0,65 | 0,62 | 0,06 | 85 | niedrig |
| **PX2** | 1,23 | 1,22 | 0,26 | 76 | hoch |

| | **Δ E 1** | **Δ E 2** | **Δ E 3** | **Glanz 60°** | **Viskosität des schwarzen Pigmentkonzentrates** |
|---|---|---|---|---|---|
| **Nach Anreibung** | | | | | |
| **S20** | 0,69 | 0,62 | 0,08 | 86 | niedrig |
| **S22** | 0,48 | 0,55 | 0,04 | 90 | niedrig |
| **S24** | 0,67 | 0,51 | 0,05 | 91 | niedrig |
| **S26** | 0,65 | 0,62 | 0,06 | 87 | Niedrig |

### Formulierung: Paraloid B 66 (Thermoplastisches Acrylat von Dow Chemicals) Mahlgut:

| | |
|---|---|
| Paraloid B 66 ( 50% in Xylol) | 25,00 |
| DIDP | 2,00 |
| Xylol | 3,5 |
| MPA | 2,50 |
| Additiv | 1,5 |
| Aerosil R 972 | 0,50 |
| Pigment | 65,00 |
| Gesamt | 100,00 |

| | |
|---|---|
| Paraloid B 66 = Thermoplastisches Acrylatharz von Dow Chemicals DIDP =Diisodecylphthalat | |

### Auflackgut:

| | |
|---|---|
| Mahlgutpaste | 38,50 |
| Paraloid B 66 | 50,00 |
| MPA | 3,40 |
| Xylol | 8,00 |
| BYK-306 | 0,10 |

| | |
|---|---|
| BYK-306: Silikonadditiv von Byk-Chemie | |

### Ergebnisse Paraloid B 66

| **Pigmente** | **Kronos 2310** | | | **Tioxide TR 92** | | | **Ti-Pure R 960** | | |
|---|---|---|---|---|---|---|---|---|---|
| **Additive** | **Viskosität** | **Δ E** | **Glanz** | **Visko sität** | **Δ E** | **Glanz** | **Visko sität** | **Δ E** | **Glanz** |
| PX1 | 3 | 4,5 | 85 | 4 | 2,5 | 83 | 4 | 3,9 | 73 |
| PX2 | 4 | 5,1 | 81 | 5 | 3,1 | 79 | 5 | 5,7 | 63 |
| P6 | 2 | 3,3 | 91 | 3 | 1,1 | 86 | 2 | 2,5 | 80 |
| P18 | 2 | 2,5 | 95 | 3 | 0,5 | 88 | 1 | 2,1 | 83 |

| | | | | | | | | | |
|---|---|---|---|---|---|---|---|---|---|
| Kronos 2310: Titandioxidpigment mit basischer Oberfläche Tioxide TR 92: Titandioxidpigment mit basischer Oberfläche Ti-Pure R 960: Titandioxidpigment mit saurer Oberfläche | | | | | | | | | |

Viskosität: 1-5, 1 = niedrig, 5= hoch

### Formulierung: Macrynal SM 510 ( 2-K Acryl)

### Mahlgut:

| | |
|---|---|
| Macrynal SM 510 | 22,22 |
| MPA | 2,00 |
| Solvesso 100 | 2,00 |
| Xylol | 3,00 |
| Butyl acetat | 3,5 |
| BYK-066 N | 0,30 |
| Additiv | 1,5 |
| Aerosil R 972 | 0,50 |
| Pigment | 65,00 |
| Gesamt | 100,00 |

| | |
|---|---|
| Macrynal SM 510 = Polyacrylatharz von Cytec BYK-066 N: Silikonentschäumer von Byk-Chemie | |

### Auflackgut::

| | |
|---|---|
| Mahlgutpaste | 38,50 |
| Macrynal SM 510 | 45,00 |
| MPA | 1,00 |
| Solvesso 100 | 7,00 |
| Xylol | 1,40 |
| Butylacetat | 7,00 |
| BYK-306 | 0,10 |

| | |
|---|---|
| BYK-306: Silikonhaltiges Oberflächenadditiv von Byk-Chemie Stamm zu Härter: 2:1 | |

### Härterlösung

| | |
|---|---|
| Desmodur N 75 | 25,0 |
| Butylacetat | 8,70 |
| Solvesso 100 | 8,80 |
| MPA | 2,50 |
| Xylol | 5,00 |
| Total | 50,00 |

Desmodur N 75: Aliphatisches Polyisocyanat (HDI-Biuret) von Bayer, 75%ig in MPA

### Ergebnisse : Macrynal SM 510

| **Pigmente** | **Kronos 2310** | | | **Tioxide TR 92** | | | **Ti-Pure R 960** | | |
|---|---|---|---|---|---|---|---|---|---|
| **Additive** | **Viskosität** | **Δ E** | **Glanz** | **Visko sität** | **Δ E** | **Glanz** | **Visko sität** | **Δ E** | **Glanz** |
| PX1 | 5 | 1,2 | 85 | 5 | 1,1 | 84 | 5 | 1,6 | 86 |
| PX2 | 5 | 1,3 | 84 | 5 | 1,6 | 81 | 5 | 5,7 | 82 |
| P6 | 2 | 0,6 | 95 | 1 | 0,3 | 90 | 2 | 0,7 | 91 |
| P18 | 1 | 0,5 | 91 | 2 | 0,6 | 93 | 1 | 0,5 | 95 |
| S6 | 1 | 0,5 | 94 | 1 | 0,5 | 92 | 2 | 0,7 | 90 |
| S9 | 1 | 0,4 | 92 | 1 | 0,6 | 92 | 1 | 0,5 | 94 |

### Formulierung: Setalux 1756 W 65

### Mahlgut:

| | |
|---|---|
| Setalux 1756 W-65 | 22,22 |
| **Additiv** | **1,5** |
| Solvesso 100 | 5,5 |
| Xylol | 5,28 |
| Aerosil R 972 | 0,50 |
| Pigment | 65,00 |
| Gesamt | 100,00 |

| | |
|---|---|
| Setalux 1756 W-65: Hydroxyacrylatcopolymer von Nuplex, 50%ig in Xylol/Butanol | |

### Auflackgut:

| | |
|---|---|
| Mahlgutpaste | 38,50 |
| Setalux 1756 W-65 | 40,00 |
| Setamine US 138-BB 70 | 16,00 |
| Solvesso 100 | 3,00 |
| Xylol | 2,30 |
| BYK-310 | 0,20 |
| Gesamt | 100,00 |

| | |
|---|---|
| Setamine US 138-BB 70: Melaminharz von Nuplex BYK-310: Polyestermodifiziertes Polydimethylsiloxane von Byk-Chemie | |

Pigment/ Bindemittel: 0,8 : 1 im Lack
Abmischung: 29,5g vom Weißlack + 0,5 g von Schwarzpaste
Einbrennbedingungen:
10 Minuten ablüften
20 Minuten bei 140 °C

### Ergebnisse : Setalux 1756 W 65

| **Pigmente** | **Kronos 2310** | | | **Tioxide TR 92** | | | **Ti-Pure R 960** | | |
|---|---|---|---|---|---|---|---|---|---|
| **Additive** | **Viskosität** | **ΔE** | **Glanz** | **Visko sität** | **ΔE** | **Glanz** | **Visko sität** | **ΔE** | **Glanz** |
| PX1 | 5 | 1,2 | 89 | 4 | 1,3 | 89 | 5 | 0,9 | 88 |
| PX2 | 5 | 1,5 | 84 | 5 | 1,7 | 88 | 5 | 1,6 | 84 |
| P6 | 1 | 0,6 | 95 | 1 | 0,3 | 92 | 2 | 0,5 | 93 |
| P18 | 1 | 0,3 | 98 | 1 | 0,6 | 98 | 1 | 0,3 | 96 |
| P22 | 1 | 0,7 | 95 | 1 | 0,3 | 92 | 2 | 0,3 | 94 |
| S6 | 1 | 0,6 | 91 | 2 | 0,9 | 90 | 2 | 0,4 | 93 |
| S9 | 1 | 0,8 | 94 | 1 | 0,8 | 91 | 1 | 0,3 | 94 |
| BX1 | 4 | 1,0 | 89 | 3 | 1,3 | 88 | 4 | 0,9 | 90 |
| B9 | 3 | 0,8 | 91 | 2 | 1,1 | 91 | 3 | 0,7 | 93 |
| B34 | 3 | 0,9 | 90 | 2 | 1,0 | 90 | 3 | 0,8 | 95 |

### Weitere Ergebnisse mit Setalux 1756 W 65

| **Pigment** | **Ti-Pure R 960** | | |
|---|---|---|---|
| **Additive** | **Viskosität** | **ΔE** | **Glanz** |
| P26 | 1 | 0,6 | 95 |
| P28 | 1 | 0,5 | 94 |
| P37 | 1 | 0,7 | 92 |
| P38 | 1 | 0,4 | 96 |
| P39 | 1 | 0,7 | 95 |
| P41 | 1 | 0,6 | 92 |
| P43 | 2 | 0,8 | 92 |
| P47 | 3 | 0,9 | 90 |
| S22 | 1 | 0,6 | 94 |
| S24 | 2 | 0,8 | 91 |
| S26 | 2 | 0,7 | 93 |
| S28 | 3 | 0,9 | 90 |

### Fazit der Beispiele:

Die generell besonders gute Qualität der erfindungsgemäßen Additivkomposition zeigt sich bezüglich Glanz, Viskosität und Rub-Out-Effekt. Besonders hervorzuheben ist die gute Universalität bezüglich sauren und basischen zu dispergierenden Pigmentpartikeln (siehe u. a. "Ergebnisse Paraloid B 66" - gemäß vorstehender Tabelle). Die erfindungsgemäße Additivkomposition unterscheidet sich außerdem, alleine verursacht durch die besondere Verfahrenstechnik des erfindungsgemäßen Verfahrens (Einsatz Überschuss TDI und anschließender Entfernung von nicht umgesetzten TDI), positiv durch vorteilhafte Effektgebung bezüglich Löslichkeitsverhalten, Glanz und Rub-Out-Effekt.

## Patentansprüche

1. Verfahren zur Herstellung einer Additivkomposition aufweisend die Schritte i) bis iii), wobei
in Schritt i) eine Hydroxykomponente der allgemeinen Formel (I)
Y(-OH)_{q} (I)
mit
Y gleich oder verschieden sowie repräsentiert durch einen 1 bis 1000 Kohlenstoffatome aufweisenden verzweigten oder unverzweigten, gesättigten oder ungesättigten organischen Rest,
q gleich oder verschieden sowie repräsentiert durch eine ganze Zahl von 1 bis 10
umgesetzt wird mit einem unterschiedlich reaktive NCO-Gruppen aufweisenden Diisocyanat der allgemeinen Formel (II)
R¹(NCO)₂ (II)
mit
R¹ gleich oder verschieden sowie repräsentiert durch einen 6 bis 20 Kohlenstoffatome enthaltenden gesättigten oder ungesättigten, verzweigten oder unverzweigten organischen Rest,
wobei das Diisocyanat der allgemeinen Formel **(II)** gegenüber der Hydroxykomponente der allgemeinen Formel (I) in einem molaren Verhältnis von mindestens (1,1 * arithmetischer Mittelwert von q) : 1,0 eingesetzt wird, so dass ein Isocyanataddukt der allgemeinen Formel (III)
Y(-O-CO-NH-R¹-NCO)_{q} (III)
mit
Y, q und R¹ jeweils wie vorstehend beschrieben,
sowie nicht umgesetztes Diisocyanat der allgemeinen Formel (II) enthaltendes Reaktionsgemisch entsteht,
in Schritt ii) wenigstens 50 Mol-% der nicht umgesetzten Teilmenge des Diisocyanats der allgemeinen Formel (II) aus dem Reaktionsgemisch entfernt wird,
in Schritt iii) gebildet wird eine mindestens einen Kopfgruppenrest Z¹ aufweisende Verbindung der allgemeinen Formel (IV)
**Y(-O-CO-NH-R¹-NH-CO-X-Z¹)_{q}** (IV)
mit
Y, q und R¹ jeweils wie vorstehend beschrieben,
X gleich oder verschieden sowie repräsentiert durch O, NH und/oder NZ²
mit
Z² gleich oder verschieden sowie repräsentiert durch einen verzweigten oder unverzweigten, gesättigten oder ungesättigten organischen Rest,
Z¹ gleich oder verschieden sowie repräsentiert durch einen mindestens zwei Kohlenstoffatome enthaltenden verzweigten oder unverzweigten, gesättigten oder ungesättigten organischen Rest, der mindestens eine Kopfgruppe aufweist, die versalzbar oder versalzt vorliegt, sowie ausgewählt ist aus der Gruppe bestehend aus tertiären Aminofunktionen, quaternären Ammoniumfunktionen, Phosphorsäureesterfunktionen sowie Carbonsäurefunktionen,
wobei Schritt iii) in Form einer einzigen Stufe iii-a) oder einer Stufenabfolge iii-b) durchgeführt wird,
in der Stufe iii-a) das in dem Reaktionsgemisch vorliegende Isocyanataddukt der allgemeinen Formel (III) umgesetzt wird mit einer den Kopfgruppenrest Z¹ aufweisenden, gegenüber Isocyanaten reaktiven Verbindung der allgemeinen Formel (V)
HX-Z¹ (V)
mit
X und Z¹ jeweils wie vorstehend beschrieben,
und in der Stufenabfolge iii-b) zunächst das in dem Reaktionsgemisch vorliegende Isocyanataddukt der allgemeinen Formel (III) umgesetzt wird mit einer Verbindung, welche aufweist eine gegenüber Isocyanaten reaktive Gruppe HX sowie mindestens eine weitere funktionelle Gruppe Q, wobei anschließend Q unter Ausbildung des Kopfgruppenrestes Z¹ mit einem weiteren an der Erzeugung des Kopfgruppenrestes Z¹ beteiligten Reagens umgesetzt wird.

2. Verfahren nach Anspruch 1, **dadurch gekennzeichnet, dass** q gleich oder verschieden ist sowie repräsentiert wird durch eine ganze Zahl von 1 bis 5, bevorzugt durch 1 und/ oder 2.

3. Verfahren zur Herstellung einer Additivkomposition nach Anspruch 1 oder 2, **dadurch gekennzeichnet, dass** q = 1 ist, so dass in dem die Schritte i) bis iii) aufweisenden Verfahren,
in Schritt i) als Hydroxykomponente eine Monohydroxyverbindung der allgemeinen Formel (la)
Y-OH (la)
mit
Y gleich oder verschieden sowie repräsentiert durch einen 1 bis 1000 Kohlenstoffatome aufweisenden verzweigten oder unverzweigten, gesättigten oder ungesättigten organischen Rest
umgesetzt wird mit einem unterschiedlich reaktive NCO-Gruppen aufweisenden Diisocyanat der allgemeinen Formel (II)
R¹(NCO)₂ (II)
mit
R¹ gleich oder verschieden sowie repräsentiert durch einen 6 bis 20 Kohlenstoffatome enthaltenden gesättigten oder ungesättigten, verzweigten oder unverzweigten organischen Rest,
wobei das Diisocyanat der allgemeinen Formel (II) gegenüber der Monohydroxyverbindung der allgemeinen Formel (la) in einem molaren Verhältnis von mindestens 1,1 : 1,0 eingesetzt wird,
so dass ein Monoisocyanataddukt der allgemeinen Formel (IIIa)
Y-O-CO-NH-R¹-NCO (IIIa)
mit
Y und R¹ jeweils wie vorstehend beschrieben,
sowie nicht umgesetztes Diisocyanat der allgemeinen Formel (II) enthaltendes Reaktionsgemisch entsteht,
in Schritt ii) wenigstens 50 Mol-% der nicht umgesetzten Teilmenge des Diisocyanats der allgemeinen Formel (II) aus dem Reaktionsgemisch entfernt wird,
in Schritt iii) gebildet wird eine mindestens einen Kopfgruppenrest Z¹ aufweisende Verbindung der allgemeinen Formel (IVa)
Y-O-CO-NH-R¹-NH-CO-X-Z¹ (IVa)
mit
Y und R¹ jeweils wie vorstehend beschrieben,
X gleich oder verschieden sowie repräsentiert durch O, NH und/oder NZ²
mit
Z² gleich oder verschieden sowie repräsentiert durch einen verzweigten oder unverzweigten, gesättigten oder ungesättigten organischen Rest,
Z¹ gleich oder verschieden sowie repräsentiert durch einen mindestens zwei Kohlenstoffatome enthaltenden verzweigten oder unverzweigten, gesättigten oder ungesättigten organischen Rest, der mindestens eine Kopfgruppe aufweist, die versalzbar oder versalzt vorliegt, sowie ausgewählt ist aus der Gruppe bestehend aus tertiären Aminofunktionen, quaternären Ammoniumfunktionen, Phosphorsäureesterfunktionen sowie Carbonsäurefunktionen,
wobei Schritt iii) in Form einer einzigen Stufe iii-a) oder einer Stufenabfolge iii-b) durchgeführt wird,
in der Stufe iii-a) das in dem Reaktionsgemisch vorliegende Monoisocyanataddukt der allgemeinen Formel (IIIa) umgesetzt wird mit einer den Kopfgruppenrest Z¹ aufweisenden, gegenüber Isocyanaten reaktiven Verbindung der allgemeinen Formel (V)
HX-Z¹ (V)
mit
X und Z¹ jeweils wie vorstehend beschrieben,
und in der Stufenabfolge iii-b) zunächst das in dem Reaktionsgemisch vorliegende Monoisocyanataddukt der allgemeinen Formel (IIIa) umgesetzt wird mit einer Verbindung, welche aufweist eine gegenüber Isocyanaten reaktive Gruppe HX sowie mindestens eine weitere funktionelle Gruppe Q, wobei anschließend Q unter Ausbildung des Kopfgruppenrestes Z¹ mit einem weiteren an der Erzeugung des Kopfgruppenrestes Z¹ beteiligten Reagens umgesetzt wird.

4. Verfahren nach einem der Ansprüche 1 bis 3, **dadurch gekennzeichnet, dass** Y mindestens einen Polyetherrest, Polyesterrest, Kohlenwasserstoffrest und/oder Polysiloxanrest enthält.

5. Verfahren nach einem der Ansprüche 1 bis 4, **dadurch gekennzeichnet, dass** Y insgesamt 1 bis 450 Ethersauerstoffatome enthält, welche bevorzugt in Ethersauerstoffatome aufweisenden Gruppen enthalten sind, die sich ableiten von Polytetrahydrofuran, Polyoxetanen und/oder Polyoxiranen.

6. Verfahren nach einem der Ansprüche 1 bis 5, **dadurch gekennzeichnet, dass** Y insgesamt 3 bis 400 Ethersauerstoffatome enthält, wobei mindestens 50, bevorzugt mindestens 80 mol-% der Ethersauerstoffatome in Ethylenoxid- und/oder Propylenoxidstruktureinheiten vorliegen.

7. Verfahren nach einem der Ansprüche 1 bis 6, **dadurch gekennzeichnet, dass** R¹ gleich oder verschieden ist sowie in Form eines Kohlenwasserstoffrests, bevorzugt als Arylengruppe, als verzweigte oder unverzweigte Alkylarylengruppe und/oder als azyklische, zyklische, verzweigte oder unverzweigte Alkylengruppe, vorliegt

8. Verfahren nach einem der Ansprüche 1 bis 7, **dadurch gekennzeichnet, dass** das Diisocyanat der allgemeinen Formel (II) vorliegt als Toluol-2,4-diisocyanat und/oder als Isophorondiisocyanat, bevorzugt als Toluol-2,4-diisocyanat.

9. Verfahren nach einem der Ansprüche 1 bis 8, **dadurch gekennzeichnet, dass** die Kopfgruppe des Kopfgruppenrestes Z¹ in Form einer Phosphorsäureesterfunktion vorliegt, Schritt iii) in Form einer Stufenabfolge iii-b) durchgeführt wird, wobei die weitere funktionelle Gruppe Q in Form einer Hydroxylgruppe und das weitere an der Erzeugung des Kopfgruppenrestes Z¹ beteiligte Reagens bevorzugt als Phosphorilierungsmittel vorliegt.

10. Verfahren nach einem der Ansprüche 1 bis 9, **dadurch gekennzeichnet, dass** der Kopfgruppenrest Z¹ als Kopfgruppe eine Phosphorsäureesterfunktion aufweist, wobei Z¹ gleich oder verschieden ist sowie repräsentiert wird durch die allgemeine Formel (VII)
R²-O-PO(OR³)ₙ(OH)₂₋ₙ (VII)
mit
R² gleich oder verschieden sowie repräsentiert durch einen mindestens zwei Kohlenstoffatome aufweisenden gesättigten oder ungesättigten, verzweigten oder unverzweigten organischen Rest,
R³ gleich oder verschieden sowie repräsentiert durch einen gesättigten oder ungesättigten, verzweigten oder unverzweigten organischen Rest sowie
n gleich oder verschieden sowie repräsentiert durch 0 und/oder 1.

11. Verfahren nach Anspruch 10, **dadurch gekennzeichnet, dass** n gleich 0 ist und bevorzugt R² gleich oder verschieden ist und repräsentiert wird durch einen gesättigten, linearen C₂-C₄₀-Alkylenrest.

12. Verfahren nach einem der Ansprüche 1 bis 8, **dadurch gekennzeichnet, dass** die Kopfgruppe des Kopfgruppenrestes Z¹ gleich oder verschieden ist sowie als tertiäre Aminofunktion oder quaternäre Ammoniumfunktion vorliegt.

13. Verfahren nach einem der Ansprüche 1 bis 12, **dadurch gekennzeichnet, dass** Z² gleich oder verschieden ist sowie repräsentiert wird durch einen optional Ethersauerstoffatome aufweisenden C₁-C₅₀-Kohlenwasserstoffrest und/oder die Entsprechung von Z¹ aufweist, mit der Maßgabe, dass Z¹ und Z² jeweils unabhängig voneinander repräsentiert werden.

14. Verfahren nach einem der Ansprüche 1 bis 13, **dadurch gekennzeichnet, dass** X gleich oder verschieden ist sowie repräsentiert wird durch NH und/oder NZ².

15. Verfahren nach einem der Ansprüche 1 bis 14, **dadurch gekennzeichnet, dass** Z¹ und Z² jeweils unabhängig voneinander durch Reste repräsentiert werden, die jeweils gegenüber Isocyanaten entweder nur verhältnismäßig schwach reaktiv oder bevorzugt inert sind.

16. Verfahren nach einem der Ansprüche 1 bis 15, **dadurch gekennzeichnet, dass** in Schritt i) das Diisocyanat der allgemeinen Formel (II) gegenüber der Hydroxykomponente der allgemeinen Formel (I) in einem molaren Verhältnis von mindestens (1,5 * arithmetischer Mittelwert von q) : 1,0, bevorzugt von mindestens (2,0 * arithmetischer Mittelwert von q) : 1,0 eingesetzt wird.

17. Verfahren nach einem der Ansprüche 1 bis 16, **dadurch gekennzeichnet, dass** in Schritt ii) wenigstens 75 Mol-%, bevorzugt wenigstens 90 Mol-%, der nicht umgesetzten Teilmenge des Diisocyanats der allgemeinen Formel (II) aus dem Reaktionsgemisch entfernt wird.

18. Verfahren nach einem der Ansprüche 3 bis 17, **dadurch gekennzeichnet, dass** das molare Verhältnis der in Schritt i) insgesamt umgesetzten Monohydroxyverbindungen der allgemeinen Formel (Ia) zu der Summe aus den in Schritt iii) umgesetzten Verbindungen der allgemeinen Formel (V) und den in Schritt iii) umgesetzten Verbindungen, welche aufweisen eine gegenüber Isocyanaten reaktive Gruppe HX sowie mindestens eine weitere funktionelle Gruppe Q, 0,9 bis 1,1, bevorzugt 0,95 bis 1,05, beträgt.

19. Verfahren nach einem der Ansprüche 3 bis 18, **dadurch gekennzeichnet, dass** in Stufe iii) soviel Verbindungen der allgemeinen Formel (Va) und/ oder soviel Verbindungen, welche aufweisen eine gegenüber Isocyanaten reaktive Gruppe HX sowie mindestens eine weitere funktionelle Gruppe Q, eingesetzt werden, dass mindestens 90 Mol-%, bevorzugt mindestens 99 Mol-% des in Stufe i) entstandenen Monoisocyanataddukts der allgemeinen Formel (IIIa) umgesetzt wird.

20. Verfahren nach einem der Ansprüche 3 bis 19, **dadurch gekennzeichnet, dass** in Schritt i) das Diisocyanat der allgemeinen Formel (II) gegenüber der Monohydroxyverbindung der allgemeinen Formel (la) in einem molaren Verhältnis von mindestens 1,5 : 1,0, bevorzugt von 2,5 : 1 bis 20 : 1, eingesetzt wird.

21. Additivkomposition herstellbar gemäß dem Verfahren nach einem der Ansprüche 1 bis 20.

22. Additivkomposition nach Anspruch 21 enthaltend
i) 10 bis 99,98 Gew.-% der Verbindung gemäß der allgemeinen Formel (IVa) **Y-O-CO-NH-R¹-NH-CO-X-Z¹,**
ii) 0,01 bis 10 Gew.-% Diurethan gemäß der allgemeinen Formel Y-O-CO-NH-R¹-NH-CO-O-Y mit Y gleich oder verschieden,
iii) 0.01 bis 10 Gew.-% Diharnstoff der allgemeinen Formel Z¹-X-CO-NH-R¹-NH-CO-X-Z¹ mit Z¹ gleich oder verschieden sowie
iv) 0 bis 8 Gew.-% Urethan der allgemeinen Formel Y-O-CO-NH-R¹-NCO.

23. Verwendung einer Additivkomposition gemäß Anspruch 21 oder 22 als Additiv, bevorzugt als Netz- und Dispergiermittel, in Beschichtungen, insbesondere Lacken, Kunststoffen, Pigmentpasten, Dichtstoffen, Kosmetika, Keramik, Klebstoffen, Vergussmassen, Spachtelmassen, Druckfarben und Tinten.

24. Feststoffgemenge, welches Partikel und/oder Fasern enthält, die mit einer Additivkomposition gemäß Anspruch 21 oder 22 behandelt worden sind.

25. Lack und/oder Kunststoff enthaltend eine Additivkomposition gemäß Anspruch 21 oder 22.

## Claims

1. Method for producing an additive composition comprising steps i) to iii),
wherein
in step i) a hydroxy component with the general formula (I)
Y(-OH)_{q} (I)
where
Y is the same or different and represented by a branched or unbranched, saturated or unsaturated organic residue comprising 1 to 1000 carbon atoms,
q is the same or different and represented by a whole number from 1 to 10
is converted with a diisocyanate comprising variably reactive NCO groups having the general formula (II)
R¹(NCO)₂ (II)
where
R¹ is the same or different and represented by a saturated or unsaturated, branched or unbranched organic residue containing 6 to 20 carbon atoms,
wherein the diisocyanate with the general formula (II) is used in relation to the hydroxy component with the general formula (I) in a molar ratio of at least (1.1 * arithmetic mean of q) : 1.0, so that an isocyanate adduct with the general formula (III)
Y(-O-CO-NH-R¹-NCO)_{q} (III)
where
Y, q and R¹ are each described as above,
results and also a reaction mixture containing unconverted diisocyanate with the general formula (II),
in step ii) at least 50 mol % of the unconverted partial fraction of the diisocyanate with the general formula (II) is removed from the reaction mixture,
in step iii) a compound is formed comprising at least one head group residue Z¹ with the general formula (IV)
Y(-O-CO-NH-R¹-N H-CO-X-Z¹)_{q} (IV)
where
Y, q and R¹ are each as described above,
X is the same or different and represented by O, NH and/or NZ²
where
Z² is the same or different and represented by a branched or unbranched, saturated or unsaturated organic residue,
Z1 is the same or different and represented by a branched or unbranched, saturated or unsaturated organic residue containing at least two carbon atoms, which organic residue has at least one head group which is present in salinized or salinizable form and which is selected from the group comprising tertiary amino functions, quaternary ammonium functions, phosphoric acid ester functions and also carbonic acid functions,
wherein step iii) is carried out in the form of a single stage iii-a) or a sequence of stages iii-b),
in stage iii-a) the isocyanate adduct with the general formula (III) present in the reaction mixture is converted with a compound comprising the head group residue Z¹ which is reactive to isocyanates having the general formula (V)
HX-Z¹ (V)
where
X and Z¹ are each as described above,
and in the sequence of stages iii-b), the isocyanate adduct with the general formula (III) present in the reaction mixture is initially converted with a compound which comprises a group HX reactive to isocyanates and also at least a further functional group Q, wherein Q is then converted with a further reagent involved in the production of the head group residue Z¹ forming the head group residue Z¹.

2. Method according to Claim 1, **characterized in that** q is the same or different and represented by a whole number between 1 and 5, preferably by 1 and/or 2.

3. Method for producing an additive composition according to Claim 1 or 2, **characterized in that** q = 1, so that in the method comprising steps i) to iii),
in step i) a monohydroxy compound with the general formula (Ia)
Y-OH (Ia)
where
Y is the same or different and represented by a branched or unbranched, saturated or unsaturated organic residue comprising 1 to 1000 carbon items
is converted as the hydroxy component with a diisocyanate having the general formula (II) comprising variably reactive NCO groups
R¹(NCO)₂ (II)
where
R1 is the same or different and represented by a saturated or unsaturated, branched or unbranched organic residue containing 6 to 20 carbon atoms,
wherein the diisocyanate with the general formula (II) is used in relation to the monohydroxy compound with the general formula (Ia) in a molar ratio of at least 1.1 : 1.0, so that a monoisocyanate adduct with the general formula (IIIa)
Y-O-CO-NH-R¹-NCO (IIIa)
where
Y and R¹ are each as described above,
and a reaction mixture containing unconverted diiosocyanate with the general formula (II) is produced,
in step ii) at least 50 mol % of the unconverted fraction of the diisocyanate with the general formula (II) is removed from the reaction mixture,
a compound with the general formula (IVa) comprising at least one head group residue Z¹ is formed in step iii)
Y-O-CO-NH-R¹-NH-CO-X-Z¹ (IVa)
where
Y and R¹ are each described as above,
X is the same or different and represented by O, N and/or NZ²
where
Z² is the same or different and also represented by a branched or unbranched, saturated or unsaturated organic residue,
Z¹ are the same or different and represented by a branched or unbranched, saturated or unsaturated organic residue containing at least two carbon atoms, which organic residue exhibits at least one head group which is present in salinized or salinizable form and is also chosen from the group comprising tertiary amino functions, quaternary ammonium functions, phosphoric acid ester functions and carbonic acid functions,
wherein step iii) is carried out in the form of a single stage iii-a) or a sequence of stages iii-b),
in stage iii-a) the monoisocyanate adduct with the general formula (IIIa) present in the reaction mixture is converted with a compound with the general formula (V) exhibiting a head group residue Z¹ which is reactive to isocyanates
HX-Z¹ (V)
where
X and Z¹ are each described as above,
and in the sequence of stages iii-b) the monoisocyanate adduct initially present in the reaction mixture with the general formula (IIIa) is converted with a compound which exhibits a group HX reactive to isocyanates and also at least one further functional group Q, wherein Q is then converted forming the head group residue Z¹ with a further reagent involved in the production of the head group residue Z¹.

4. Method according to one of Claims 1 to 3, **characterized in that** Y contains at least one polyether residue, polyester residue, hydrocarbon residue and/or polysiloxane residue.

5. Method according to one of Claims 1 to 4, **characterized in that** Y contains a total of 1 to 450 ether oxygen atoms which are preferably contained in groups exhibiting ether oxygen atoms which are derived from polytetrahydrofuran, polyoxethanes and/or polyoxiranes.

6. Method according to one of Claims 1 to 5, **characterized in that** Y contains a total of 3 to 400 ether oxygen atoms, wherein at least 50, preferably at least 80 mol %, of the ether oxygen atoms are present in ethylene oxide and/or propylene oxide structural units.

7. Method according to one of Claims 1 to 6, **characterized in that** R¹ is the same or different and is also present in the form of a hydrocarbon residue, preferably as an arylene group, as a branched or unbranched alkylarylene group and/or as an acyclic, cyclic, branched or unbranched alkylene group.

8. Method according to one of Claims 1 to 7, **characterized in that** the diiosocyanate with the general formula (II) is present as 2,4-toluene diisocyanate and/or as isophorone diisocyanate, preferably as 2,4-toluene diisocyanate.

9. Method according to one of Claims 1 to 8, **characterized in that** the head group of the head group residue Z¹ is present in the form of a phosphoric acid ester function, step iii) is carried out in the form of a sequence of stages iii-b), wherein the further functional group Q is present in the form of a hydroxyl group and the further reagent involved in the production of the head group residue Z¹ as phosphorylation means.

10. Method according to one of Claims 1 to 9, **characterized in that** the head group residue Z¹ exhibits a phosphoric acid ester function as the head group, wherein Z¹ is the same or different and is represented by the general formula (VII)
R²-O-PO(OR³)ₙ(OH)₂₋ₙ (VII)
where
R² is the same or different and represented by a saturated or unsaturated, branched or unbranched organic residue comprising at least two carbon atoms,
R³ is the same or different and represented by a saturated or unsaturated, branched or unbranched organic residue and also
n is the same or different and represented by 0 and/or 1.

11. Method according to Claim 10, **characterized in that** n equals 0 and R2 is preferably the same or different and represented by a saturated, linear C₂-C₄₀ alkylene residue.

12. Method according to one of Claims 1 to 8, **characterized in that** the head group of the head group residue Z¹ is the same or different and is also present as the tertiary amino function or quaternary ammonium function.

13. Method according to one of Claims 1 to 12, **characterized in that** Z² is the same or different and represented by a C₁-C₅₀ hydrocarbon residue optionally comprising ether oxygen atoms and/or exhibits the equivalent of Z¹, on the condition that Z¹ and Z² are each represented independently of one another.

14. Method according to one of Claims 1 to 13, **characterized in that** X is the same or different and represented by NH and/or NZ².

15. Method according to one of Claims 1 to 14, **characterized in that** Z¹ and Z² are each represented independently of one another by residues which in each case are either only comparatively weakly reactive to isocyanates or are preferably inert.

16. Method according to one of Claims 1 to 15, **characterized in that** in step i) the diisocyanate with the general formula (II) is used in respect of the hydroxy component with the general formula (I) in a molar ratio of at least (1.5 * arithmetic mean of q) : 1.0, preferably of at least (2.0 * arithmetic mean of q) : 1.0.

17. Method according to one of Claims 1 to 16, **characterized in that** in step ii) at least 75 mol %, preferably at least 90 mol %, of the unconverted fraction of the diisocyanate with the general formula (II) is removed from the reaction mixture.

18. Method according to one of Claims 3 to 17, **characterized in that** the molar ratio of the monohydroxy compounds with the general formula (Ia) totally converted in step i) to the total of the compounds with the general formula (V) converted in step iii) and the compounds converted in step iii) which exhibit a group HX reactive to isocyanates and also at least one further functional group Q is 0.9 to 1.1, preferably 0.95 to 1.05.

19. Method according to one of Claims 3 to 18, **characterized in that** in stage iii) so many compounds with the general formula (Va) and/or so many compounds which exhibit a group HX reactive to isocyanates and also at least one further functional group Q are used that at least 90 mol %, preferably at least 99 mol %, of the monoisocyanate adduct with the general formula (IIIa) produced in stage i) is converted.

20. Method according to one of Claims 3 to 19, **characterized in that** in stage i) the diisocyanate with the general formula (II) is used in a molar ratio with the monohydroxy compound with the general formula (Ia) of at least 1.5 : 1.0, preferably of 2.5 : 1 to 20 : 1.

21. Additive composition that can be produced in accordance with the method according to one of Claims 1 to 20.

22. Additive composition according to Claim 21 containing
i) 10 to 99.98 % by wt of the compound according to the general formula (IVa) Y-O-CO-NH-R¹-NH-CO-X-Z¹,
ii) 0.01 to 10 % by wt diurethane with the general formula Y-O-CO-NH-R¹-NH-CO-O-Y where Y is the same or different,
iii) 0.01 to 10 % by wt diurea with the general formula Z¹-X-CO-NH-R¹-NH-CO-X-Z¹ where Z¹ is the same or different and
iv) 0 to 8 % by wt urethane with the general formula Y-O-CO-NH-R¹-NCO.

23. Use of an additive composition according to Claim 21 or 22 as an additive, preferably as a wetting and dispersing agent, in coatings, particularly paints, plastics, pigment pastes, sealants, cosmetics, ceramics, adhesives, casting compounds, body fillers, printing dyes and inks.

24. Solid mixture containing particles and/or fibres which have been treated using an additive composition according to Claim 21 or 22.

25. Paint and/or plastic containing an additive composition according to Claim 21 or 22.

## Revendications

1. Procédé de préparation d'une composition additive comportant les étapes i) à iii), dans lequel
dans l'étape i), on fait réagir un composant hydroxy de formule générale (I)
Y(-OH)_{q} (I)
dans laquelle
Y est identique ou différent et est représenté par un radical organique saturé ou insaturé, ramifié ou non ramifié, comportant 1 à 1000 atomes de carbone,
q est identique ou différent, et représente un nombre entier de 1 à 10,
avec un diisocyanate de formule générale (II), comportant des groupes NCO ayant différentes réactivités
R¹(NCO)₂ (II)
dans laquelle
R¹ est identique ou différent et est représenté par un radical organique ramifié ou non ramifié, saturé ou insaturé, contenant 6 à 20 atomes de carbone,
le diisocyanate de formule générale (II) étant utilisé selon un rapport en moles, par rapport au composant hydroxy de formule générale (I), d'au moins (1,1*moyenne arithmétique de q):1,0, de façon qu'il se forme un produit d'addition d'isocyanate de formule générale (III)
Y(-O-CO-NH-R¹-NCO)_{q} (III)
dans laquelle
Y, q et R¹ sont chacun tels que décrits ci-dessus,
ainsi qu'un mélange réactionnel contenant un diisocyanate n'ayant pas réagi, de formule générale (II),
dans l'étape ii), au moins 50 % en moles de la partie partielle n'ayant pas réagi du diisocyanate de formule générale (II) sont éliminés du mélange réactionnel,
dans l'étape iii), il se forme un composé de formule générale (IV), comportant au moins un radical de tête Z¹
Y(-O-CO-NH-R¹-NH-CO-X-Z¹)_{q} (IV)
dans laquelle
Y, q et R¹ sont chacun tels que décrits ci-dessus,
X est identique ou différent et est représenté par O, NH et/ou
NZ², où Z² est identique ou différent et est représenté par un radical organique saturé ou insaturé, ramifié ou non ramifié,
Z¹ est identique ou différent, et est représenté par un radical organique saturé ou insaturé, ramifié ou non ramifié, contenant au moins deux atomes de carbone, qui comprend au moins un groupe de tête, lequel est salifiable ou se présente sous forme salifiée, et est choisi dans le groupe constitué de fonctions amino tertiaire, de fonctions ammonium quaternaire, de fonctions ester de l'acide phosphorique, ainsi que de fonctions acide carboxylique,
l'étape iii) étant mise en oeuvre sous forme d'un étage unique iii)-a) ou d'une suite d'étages iii-b),
dans l'étage iii-a), le produit d'addition isocyanate de formule générale (III), présent dans le mélange réactionnel, est mis à réagir avec un composé de formule générale (V), réactif vis-à-vis des isocyanates, comportant le radical de tête Z¹
HX-Z¹ (V)
dans laquelle
X et Z¹ sont chacun tels que décrits ci-dessus,
et, dans la suite d'étages iii-b), on fait d'abord réagir le produit d'addition isocyanate de formule générale (III), présent dans le mélange réactionnel, avec un composé qui présente un groupe HX réactif vis-à-vis des isocyanates, ainsi qu'au moins un autre groupe fonctionnel Q, Q étant ensuite mis à réagir, au moment de la formation du radical de tête Z¹, avec un réactif supplémentaire participant à la production du radical de tête Z¹.

2. Procédé selon la revendication 1, **caractérisé en ce que** q est identique ou différent, et représente un nombre entier de 1 à 5, de préférence 1 et/ou 2.

3. Procédé de préparation d'une composition additive selon la revendication 1 ou 2, **caractérisé en ce que** q = 1, de sorte que, dans le procédé comprenant les étapes i) à iii),
dans l'étape i), on fait réagir en tant que composant hydroxy un composé monohydroxylé de formule générale (Ia)
Y-OH (Ia)
dans laquelle
Y est identique ou différent et est représenté par un radical organique saturé ou insaturé, ramifié ou non ramifié, comprenant 1 à 1000 atomes de carbone,
avec un diisocyanate de formule générale (II), comprenant des groupes NCO ayant différentes réactivités
R¹(NCO)₂ (II)
dans laquelle
R¹ est identique ou différent, et est représenté par un radical organique ramifié ou non ramifié, saturé ou insaturé, contenant 6 à 20 atomes de carbone,
le diisocyanate de formule générale (II) étant utilisé selon un rapport en moles, par rapport au composé monohydroxylé de formule générale (Ia), d'au moins 1,1:1,0,
de façon qu'il se forme un produit d'addition monoisocyanate de formule générale (IIIa)
Y-O-CO-NH-R¹-NCO (IIIa)
dans laquelle
Y et R¹ sont chacun tels que décrits ci-dessus,
ainsi qu'un mélange réactionnel contenant le diisocyanate n'ayant pas réagi de formule générale (II),
dans l'étape ii), au moins 50 % en moles de la partie partielle n'ayant pas réagi du diisocyanate de formule générale (II) sont éliminés du mélange réactionnel,
dans l'étape iii), il se forme un composé de formule générale (IVa), comprenant au moins un radical de tête Z¹
Y-O-CO-NH-R¹-NH-CO-X-Z¹ (IVa)
dans laquelle
Y et R¹ sont chacun tels que décrits ci-dessus,
X est identique ou différent, et est représenté par O, NH et/ou NZ², où Z² est identique ou différent et est représenté par un radical organique saturé ou insaturé, ramifié ou non ramifié,
Z¹ est identique ou différent et est représenté par un radical organique saturé ou insaturé, ramifié ou non ramifié, contenant au moins deux atomes de carbone, qui comprend au moins un groupe de tête, qui est salifiable ou se présente sous forme salifiée, et est choisi dans le groupe constitué de fonctions amino tertiaire, de fonctions ammonium quaternaire, de fonctions ester de l'acide phosphorique, ainsi que de fonctions acide carboxylique,
l'étape iii) étant mise en oeuvre sous forme d'un étage unique iii-a) ou d'une suite d'étages iii-b),
dans l'étage iii-a), le produit d'addition monoisocyanate de formule générale (IIIa) présent dans le mélange réactionnel est mis à réagir avec un composé de formule générale (V), réactif vis-à-vis des isocyanates, comprenant un radical de tête Z¹
HX-Z¹ (V)
dans laquelle
X et Z¹ sont chacun tels que décrits ci-dessus,
et, dans la suite d'étages iii-b), on fait d'abord réagir le produit d'addition monoisocyanate de formule générale (IIIa), présent dans le mélange réactionnel, avec un composé qui présente un groupe HX réactif vis-à-vis des isocyanates, ainsi qu'au moins un groupe fonctionnel supplémentaire Q, Q étant ensuite mis à réagir, au moment de la formation du radical de tête Z¹, avec un réactif supplémentaire participant à la production du radical de tête Z¹.

4. Procédé selon l'une des revendications 1 à 3, **caractérisé en ce que** Y contient au moins un radical polyéther, un radical polyester, un radical hydrocarboné et/ou un radical polysiloxane.

5. Procédé selon l'une des revendications 1 à 4, **caractérisé en ce que** Y contient en tout 1 à 450 atomes d'oxygène d'éther, qui de préférence sont contenus dans des groupes comprenant des atomes d'oxygène d'éther, qui dérivent du polytétrahydrofuranne, de polyoxétannes et/ou de polyoxirannes.

6. Procédé selon l'une des revendications 1 à 5, **caractérisé en ce que** Y contient en tout 3 à 400 atomes d'oxygène d'éther, au moins 50, de préférence au moins 80 % en moles des atomes d'oxygène d'éther étant présents dans des motifs structuraux oxyde d'éthylène et/ou oxyde de propylène.

7. Procédé selon l'une des revendications 1 à 6, **caractérisé en ce que** R¹ est identique ou différent, et se présente sous forme d'un radical hydrocarboné, de préférence sous forme d'un groupe arylène, sous forme d'un groupe alkylarylène ramifié ou non ramifié et/ou sous forme d'un groupe alkylène acyclique, cyclique, ramifié ou non ramifié.

8. Procédé selon l'une des revendications 1 à 7, **caractérisé en ce que** le diisocyanate de formule générale (II) se présente sous forme de 2,4-diisocyanate de toluène et/ou de diisocyanate de d'isophorone, de préférence de 2,4-diisocyanate de toluène.

9. Procédé selon l'une des revendications 1 à 8, **caractérisé en ce que** le groupe de tête du radical de tête Z¹ se présente sous forme d'une fonction ester d'acide phosphorique, l'étape iii) est mise en oeuvre sous forme d'une suite d'étages iii-b), le groupe fonctionnel supplémentaire Q se présentant sous forme d'un groupe hydroxyle, et le réactif supplémentaire participant à la production du radical de tête Z¹ se présentant de préférence sous forme d'un agent de phosphorylation.

10. Procédé selon l'une des revendications 1 à 9, **caractérisé en ce que** le radical de tête Z¹ comprend en tant que groupe de tête une fonction ester d'acide phosphorique, Z¹ étant identique ou différent et étant représenté par la formule générale (VII)
R²-O-PO(OR³)ₙ(OH)₂₋ₙ (VII)
dans laquelle
R² est identique ou différent et est représenté par un radical organique ramifié ou non ramifié, saturé ou insaturé, comprenant au moins deux atomes de carbone,
R³ est identique ou différent, et est représenté par un radical organique ramifié ou non ramifié, saturé ou insaturé, et
n est identique ou différent, et représente 0 et/ou 1.

11. Procédé selon la revendication 10, **caractérisé en ce que** n vaut 0, et de préférence R² est identique ou différent et est représenté par un radical alkylène en C₂-C₄₀ linéaire ramifié.

12. Procédé selon l'une des revendications 1 à 8, **caractérisé en ce que** le groupe de tête du radical de tête Z¹ est identique ou différent, et se présente sous forme d'une fonction amino tertiaire ou d'une fonction ammonium quaternaire.

13. Procédé selon l'une des revendications 1 à 12, **caractérisé en ce que** Z² est identique ou différent et est représenté par un radical hydrocarboné en C₁-C₅₀ comprenant en option des atomes d'oxygène d'éther, et/ou correspond à Z¹, à la condition que Z¹ et Z² soient chacun représentés indépendamment l'un de l'autre.

14. Procédé selon l'une des revendications 1 à 13, **caractérisé en ce que** X est identique ou différent, et est représenté par NH et/ou NZ².

15. Procédé selon l'une des revendications 1 à 14, **caractérisé en ce que** Z¹ et Z² sont chacun indépendamment de l'autre représentés par des radicaux qui chacun sont, vis-à-vis des isocyanates, soit réactifs seulement d'une manière relativement faible, soit de préférence inertes.

16. Procédé selon l'une des revendications 1 à 15, **caractérisé en ce que** dans l'étape i) le diisocyanate de formule générale (II) est utilisé selon un rapport en moles, par rapport au composant hydroxy de formule générale (I), d'au moins (1,5*moyenne arithmétique de q):1,0, de préférence d'au moins (2,0*moyenne arithmétique de q):1,0.

17. Procédé selon l'une des revendications 1 à 16, **caractérisé en ce que**, dans l'étape ii), au moins 75 % en moles, de préférence au moins 90 % en moles de la partie partielle n'ayant pas réagi du diisocyanate de formule générale (II) sont éliminés du mélange réactionnel.

18. Procédé selon l'une des revendications 3 à 17, **caractérisé en ce que** le rapport en moles entre les composés monohydroxylés de formule générale (Ia) globalement mis à réagir dans l'étape i), et la somme des composés de formule générale (V) mis à réagir dans l'étape iii) et des composés mis à réagir dans l'étape iii), qui présentent un groupe HX réactif vis-à-vis des isocyanates, ainsi qu'au moins un groupe fonctionnel supplémentaire Q, est de 0,9 à 1,1, de préférence de 0,95 à 1,05.

19. Procédé selon l'une des revendications 3 à 18, **caractérisé en ce que**, dans l'étape iii), on utilise une quantité de composés de formule générale (Va), et/ou une quantité de composés qui présentent un groupe HX réactif vis-à-vis des isocyanates, ainsi qu'au moins un groupe fonctionnel supplémentaire Q, suffisantes pour faire réagir au moins 90 % en moles, de préférence au moins 99 % en moles du produit d'addition monoisocyanate de formule générale (IIIa) formé dans l'étape i).

20. Procédé selon l'une des revendications 3 à 19, **caractérisé en ce que** dans l'étape i) on utilise le diisocyanate de formule générale (II) selon un rapport en moles, par rapport au composé monohydroxylé de formule générale (Ia), d'au moins 1,5:1,0, de préférence de 2,5:1 à 20:1.

21. Composition additive pouvant être préparée par le procédé selon l'une des revendications 1 à 20.

22. Composition additive selon la revendication 21, contenant
i) 10 à 99,98 % en poids du composé de formule générale (IVa) Y-O-CO-NH-R¹-NH-CO-X-Z¹,
ii) 0,01 à 10 % en poids de diuréthanne de formule générale Y-O-CO-NH-R¹-NH-CO-O-Y, dans laquelle Y est identique ou différent,
iii) 0,01 à 10 % en poids de diurée de formule générale Z¹-X-CO-NH-R¹-NH-CO-X-Z¹, dans laquelle Z¹ est identique ou différent, ainsi que
iv) 0 à 8 % en poids en poids d'uréthanne de formule générale Y-O-CO-NH-R¹-NCO.

23. Utilisation d'une composition additive selon la revendication 21 ou 22 en tant qu'additif, de préférence en tant que mouillant ou dispersant, dans des revêtements, en particulier des peintures, des plastiques, des pâtes pigmentaires, des masses d'étanchéité, des cosmétiques, une céramique, des adhésifs, des masses de remplissage, des masses à spatuler, des encres d'imprimerie et des encres.

24. Mélange solide qui contient des particules et/ou des fibres qui ont été traitées avec une composition additive selon la revendication 21 ou 22.

25. Peinture et/ou plastique contenant une composition additive selon la revendication 21 ou 22.
